(19) Europäisches Patentamt / European Patent Office / Office européen des brevets

(11) **EP 4 730 896 A1**

(12) **EUROPEAN PATENT APPLICATION**
published in accordance with Art. 153(4) EPC

(43) Date of publication:
**22.04.2026 Bulletin 2026/17**

(21) Application number: **23941019.4**

(22) Date of filing: **14.06.2023**

(51) International Patent Classification (IPC):
**H04W 74/00** (2009.01)

(52) Cooperative Patent Classification (CPC):
**H04W 74/00**

(86) International application number:
**PCT/CN2023/100190**

(87) International publication number:
**WO 2024/254782 (19.12.2024 Gazette 2024/51)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **GUANGDONG OPPO MOBILE
TELECOMMUNICATIONS
CORP., LTD.
Dongguan, Guangdong 523860 (CN)**

(72) Inventors:
• **GAO, Ning**
  **Dongguan, Guangdong 523860 (CN)**
• **ZHANG, Jun**
  **Dongguan, Guangdong 523860 (CN)**
• **LUO, Chaoming**
  **Dongguan, Guangdong 523860 (CN)**

(74) Representative: **Novagraaf Technologies
2 rue Sarah Bernhardt
CS90017
92665 Asnières-sur-Seine Cedex (FR)**

(54) **WIRELESS COMMUNICATION METHOD AND DEVICE**

(57)     Provided are methods for wireless communication, a station (STA), and an access point (AP), which relate to the field of communications. The method is performed by a station (STA) having uplink (UL) data to be transmitted, and includes: transmitting (S210) a first medium access control (MAC) frame, wherein the first MAC frame is configured for channel contention, and a channel contention result corresponding to the first MAC frame is associated with grouping information of the STA.

**200**

FIG. 13

**Description**

**TECHNICAL FIELD**

Embodiments of the present disclosure relate to the field of communications, and more specifically, to methods for wireless communication and devices thereof.

**RELATED ART**

In a wireless local area network (WLAN), an enhanced distributed channel access (EDCA) mechanism has been introduced to improve channel access performances. However, in some scenarios with a large number of stations (STAs), performances of the current EDCA mechanism need to be further improved.

**SUMMARY**

Embodiments of the present disclosure provide methods for wireless communication and devices thereof. An STA grouping function is introduced in channel contention, such that assignment of a transmission opportunity (TXOP) is more efficient, a usage frequency of multi-user uplink (MU UL) transmission increases, a latency of transmission of UL and downlink (DL) data is reduced, and latency jitter is alleviated.

A first aspect provides a method for wireless communication. The method is performed by an STA, wherein the STA has UL data to be transmitted; and the method includes:
transmitting a first medium access control (MAC) frame, wherein the first MAC frame is configured for channel contention, and a channel contention result corresponding to the first MAC frame is associated with grouping information of the STA.

A second aspect provides a method for wireless communication. The method is performed by an access point (AP), and includes:

receiving a first MAC frame from an STA, wherein
the first MAC frame is configured for channel contention, a channel contention result corresponding to the first MAC frame is associated with grouping information of the STA, and the STA has UL data to be transmitted.

A third aspect provides an STA configured to perform the method for wireless communication in the first aspect.

Specifically, the STA includes functional modules configured to perform the method for wireless communication in the first aspect.

A fourth aspect provides an AP configured to perform the method for wireless communication in the second aspect.

Specifically, the AP includes functional modules configured to perform the method for wireless communication in the second aspect.

A fifth aspect provides an STA, including a processor and a memory, wherein the memory is configured to store one or more computer programs, and the processor is configured to call and run the one or more computer programs stored in the memory to cause the STA to perform the method for wireless communication in the first aspect.

A sixth aspect provides an AP, including a processor and a memory, wherein the memory is configured to store one or more computer programs, and the processor is configured to call and run the one or more computer programs stored in the memory to cause the AP to perform the method for wireless communication in the second aspect.

A seventh aspect provides a device configured to perform the method for wireless communication in any one of the first and the second aspects.

Specifically, the device includes a processor configured to call and run one or more computer programs in a memory to cause a device in which the chip is installed to perform the method for wireless communication in any one of the first and the second aspects.

An eighth aspect provides a computer-readable storage medium configured to store one or more computer programs, wherein the one or more computer programs, when called and run, cause a device to perform the method for wireless communication in any one of the first and the second aspects.

A ninth aspect provides a computer program product, including one or more computer program instructions, wherein the one or more computer program instructions, when loaded and executed, cause a device to perform the method for wireless communication in any one of the first and the second aspects.

A tenth aspect provides a computer program, wherein the computer program, when loaded and run, cause a device to perform the method for wireless communication in any one of the first and the second aspects.

According to the technical solutions, the STA grouping function is introduced in the channel contention, such that assignment of the TXOP is more efficient, the usage frequency of MU UL increases, the latency of transmission of UL and DL data is reduced, and the latency jitter is alleviated.

## BRIEF DESCRIPTION OF DRAWINGS

FIG. 1 is a schematic diagram of an architecture of a communication system applicable to some embodiments of the present disclosure;

FIG. 2 is a schematic diagram of a schematic diagram of channel access priorities and timings of a quality of service (QoS) STA and a non-QoS STA according to the present disclosure;

FIG. 3 is a schematic diagram of a timing relationship of an EDCA mechanism according to the present disclosure;

FIG. 4 is a schematic diagram of single user (SU) UL transmission according to the present disclosure;

FIG. 5 is a schematic diagram of MU UL transmission according to the present disclosure;

FIG. 6 is a schematic diagram of a null data physical protocol data unit (NDP) feedback report mechanism according to the present disclosure;

FIG. 7 is a schematic diagram of a format of a null data physical protocol data unit feedback report polling (NFRP) trigger frame according to the present disclosure;

FIG. 8 is a schematic diagram of a frame format of a Common Info field according to the present disclosure;

FIG. 9 is a schematic diagram of a frame format of a User Info List field according to the present disclosure;

FIG. 10 is a schematic diagram of a format of a high efficiency (HE) trigger-based (TB) feedback NDP according to the present disclosure;

FIG. 11 is a schematic diagram of a probability that an STA or an AP gains a TXOP in one channel contention according to the present disclosure;

FIG. 12 is a schematic diagram illustrating three stages of channel contention according to some embodiments of the present disclosure;

FIG. 13 is a schematic flowchart of a method for wireless communication according to some embodiments of the present disclosure;

FIG. 14 is a schematic diagram of a grouping-request to send (G-RTS) frame according to some embodiments of the present disclosure;

FIG. 15 to FIG. 20 are schematic diagrams of channel contention and data reception and/or transmission according to some embodiments of the present disclosure;

FIG. 21 is a schematic block diagram of an STA according to some embodiments of the present disclosure;

FIG. 22 is a schematic block diagram of an AP according to some embodiments of the present disclosure;

FIG. 23 is a schematic block diagram of a communication device according to some embodiments of the present disclosure;

FIG. 24 is a schematic block diagram of an apparatus according to some embodiments of the present disclosure; and

FIG. 25 is a schematic block diagram of a communication system according to some embodiments of the present disclosure.

## DETAILED DESCRIPTION

The technical solutions according to the embodiments of the present disclosure are described hereinafter with reference to the accompanying drawings in the embodiments of the present disclosure. Apparently, the described embodiments are merely some rather than all of the embodiments of the present disclosure. All other embodiments acquired by a person of ordinary skill in the art based on the embodiments of the present disclosure without creative efforts shall fall within the protection scope of the present disclosure.

The technical solutions according to the embodiments of the present disclosure can be applicable to various communication systems, such as a WLAN, wireless fidelity (Wi-Fi), or other communication systems.

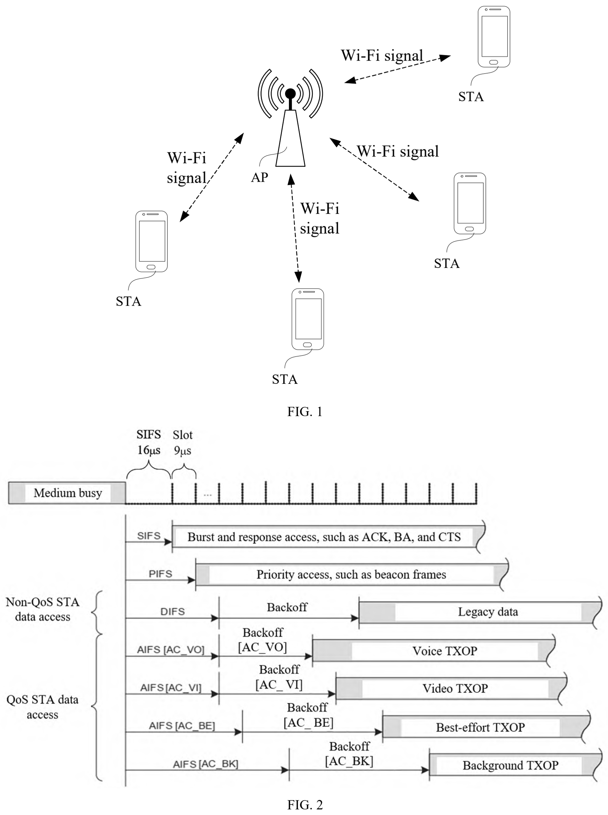

FIG. 1 is a schematic diagram of a wireless communication system according to some embodiments of the present disclosure. As illustrated in FIG. 1, the wireless communication system includes an AP and an STA.

In some scenarios, the AP is also referred to as an AP STA. In other words, the AP is also an STA in a sense. In some scenarios, the STA is also referred to as a non-AP STA.

In some embodiments, the STA includes the AP STA and the non-AP STA. Communications in a communication system may be communications between the AP and the non-AP STA, communications between non-AP STAs, or communications between the STA and a peer STA. The peer STA may be a device in peer communicating with the STA. For example, the peer STA may be the AP or the non-AP STA.

The AP is equivalent to a bridge that connects a wired network and a wireless network, and mainly functions to connect clients in the wireless network and then connect the wireless network to the Ethernet. An AP device may be a terminal device (such as a mobile phone) with a Wi-Fi chip or a network device (such as a router).

It should be understood that a role of the STA in the communication system is not absolute. For example, in some scenarios, when the mobile phone is connected to the router, the mobile phone is the non-AP STA; or when the mobile phone serves as a hotspot for another mobile phone, the mobile phone acts as the AP.

The AP and the non-AP STA may be devices applicable to the Internet of Vehicles, nodes and sensors in the Internet of Things (IoT), smart cameras, smart remote controls, and smart water and electricity meters in a smart home, sensors in a smart city, or the like.

In some embodiments, the non-AP STA supports an 802.11be standard. The non-AP STA may further support a plurality of current and future WLAN standards of an 802.11 family, such as 802.11ax, 802.11ac, 802.11n, 802.11g, 802.11b, and 802.11a.

In some embodiments, the AP is a device supporting the 802.11be standard. The AP may also be a device supporting a plurality of current and future WLAN standards of the 802.11 family, such as the 802.11ax, the 802.11ac, the 802.11n, the 802.11g, the 802.11b, and the 802.11a.

In the embodiments of the present disclosure, the STA may be a mobile phone, a pad, a computer, a virtual reality (VR) device, an augmented reality (AR) device, a wireless device in industrial control, a set-top box, a wireless device in self-driving, an in-vehicle communication device, a wireless device in a remote medical system, a wireless device in a smart grid, a wireless device in transportation safety, a wireless device in the smart city or the smart home, a wireless communication chip, an application specific integrated circuit ( ASIC), a system on chip (SOC), or the like that supports a WLAN/Wi-Fi technology.

Bands that are supported by the WLAN technology include but are not limited to low bands (2.4 GHz, 5 GHz, and 6 GHz) and high bands (45 GHz and 60 GHz).

At least one link is present between the STA and the AP. In some embodiments, the STA and the AP support multi-band communication. For example, communications may be performed simultaneously on 2.4 GHz, 5 GHz, 6 GHz, 45 GHz, and 60 GHz bands, or communications may be performed simultaneously on different channels within a same band (or different bands), such that a throughput and/or reliability of communication between devices is improved. Such device is usually referred to as a multi-band device or a multi-link device (MLD), and sometimes is also referred to as a multi-link entity or a multi-band entity. The MLD may be the AP device or an STA device. In a case where the MLD is the AP device, the MLD includes at least one AP. In a case where the MLD is the STA device, the MLD includes at least one non-AP STA.

The MLD including the at least one AP may be referred to as an AP MLD, and the MLD including the at least one non-AP STA may be referred to as a non-AP MLD.

In the embodiments of the present disclosure, the AP may include a plurality of APs, and the non-AP may include a plurality of STAs. A plurality of links are formed between the APs in the AP and the STAs in the non-AP, and data communication is achieved between an AP in the AP and a corresponding STA in the non-AP through a corresponding link.

The AP is a device deployed in the WLAN to provide a wireless communication function for the STA. The STA may be a user equipment (UE), an access terminal, a subscriber unit, a subscriber station, a mobile station, a mobile platform, a remote station, a remote terminal, a mobile device, a wireless communication device, a user agent, or a user apparatus. In some embodiments, the STA may be a cellular phone, a cordless phone, a Session Initiation Protocol (SIP) phone, a wireless local loop (WLL) station, a personal digital assistant (PDA), a handheld device having the wireless communication function, a computing device or any other processing device connected to a wireless modem, an in-vehicle device, or a wearable device, which is not limited in the embodiments of the present disclosure.

In some embodiments, both the STA and the AP comply with an IEEE 802.11 standard.

It should be understood that the terms "system" and "network" herein are exchangeable. The term "and/or" herein merely describes an association relationship between associated objects, and indicates that three types of relationships may exist. For example, A and/or B may indicate (A), (A and B), or (B). In addition, the character "/" herein generally indicates that the associated objects are in an "or" relationship.

It should be understood that the term "indication" in the embodiments of the present disclosure may be a direct indication, an indirect indication, or an association relationship. For example, A indicates B, which may mean that A directly indicates B, for example, B is acquired through A; may mean that A indirectly indicates B, for example, A indicates C, and B is acquired through C; or may mean an association relationship between A and B.

The terms used in the implementations of the present disclosure are used only to explain the specific embodiments of the present disclosure, and are not intended to limit the present disclosure. The terms "first," "second," "third," "fourth," and the like in the description, appended claims, and accompanying drawings of the present disclosure are intended to distinguish between different objects but do not indicate a specific sequence. Moreover, the terms "include/comprise," "have," and any variations thereof are intended to cover non-exclusive inclusion.

It should be understood that in the embodiments of the present disclosure, the phrase "at least one or at least one of" may mean "one or more", the term "positive integer" may represent "values such as 1, 2, 3, ...", the term "non-negative integer" may represent "values such as 0, 1, 2, 3, ...", and the term "integer" may represent "values such as ..., -3, -2, -1, 0, 1, 2, 3, ...", and these may be replaced with any possible values based on requirements of the embodiments.

It should be understood that the figures and/or tables illustrated in the embodiments of the present disclosure are merely examples. Specifically, in some cases, some information in the figures and/or tables illustrated in the embodiments of the present disclosure may independently constitute optional embodiments. For example, each row or each column in a table may independently constitute an optional embodiment, which is not limited in the present disclosure.

In the description of the embodiments of the present disclosure, the term "corresponding" may indicate a direct or indirect correspondence between two objects, an association relationship between the two objects, or a relationship between indication and being indicated, between configuration and being configured, or the like.

In the embodiments of the present disclosure, the term "predefinition" or "pre-configuration" may be implemented by pre-storing corresponding codes or a corresponding table in a device (such as the STA or the network device) or through another method that may be used to indicate relevant information, and a specific implementation method thereof is not limited in the present disclosure. For example, a predefined thing may be a thing defined in a protocol.

In the embodiments of the present disclosure, the "protocol" may be a standard protocol in the communication field, for example, a Wi-Fi protocol and a related protocol applicable in a future Wi-Fi communication system, which is not limited in the present disclosure.

For a better understanding of the embodiments of the present disclosure, an EDCA mechanism related to the present disclosure is described.

An IEEE 802.11e standard defines a QoS-enhanced channel access mechanism, that is, the EDCA. Compared with a traditional distributed coordination function (DCF), the EDCA mechanism defines four different access categories (ACs), that is, AC_VO, AC_VI, AC_BE, and AC_BK. As listed in Table 1, different ACs have different parameter settings, which results in different priorities for accessing a medium.

Table 1 Parameter setting of the EDCA mechanism

| AC | CWmin | CWmax | AIFSN | TXOP limit | | | | |
|---|---|---|---|---|---|---|---|---|
| | | | | For PHYs defined In Clause 15 (DSSS PHY specification for the 2.4 GHz band designated for ISM applications) and Clause 16 (High rate direct sequence spread spectrum (HR/ DSSS) PHY specification) | For PHYs defined in Clause 17 (Orthogonal frequency division multiplexing (OFDM) PHY specification), Clause 18 (Extended Rate PHY (ERP) specification), Clause 19(High Throughput (HT) PHY specification(#2 297)), and Clause 21 (Very high throughput (VHT) PHY specification) | For PHY defined in Clause 22 (Television very high throughput (TVHT) PHY specification) | Clause 23 (3811Sub 1 GHz(SIG) PHY specificatio n) | Other PHYs |
| AC_BK | aCWmin | aCWmax | 7 | 3.264 ms | 2.528 ms | 0 | 15.008 ms | 0 |
| AC_BE | aCWmin | aCWmax | 3 | 3.264 ms | 2.528 ms | 0 | 15.008 ms | 0 |
| AC_VI | (aCWmin+1)/ 2-1 | aCWmin | 2 | 6.016 ms | 4.096 ms | 22.56 ms (BCU: 6 or 7 MHz), 16.92 ms (BCU: 8 MHz) | 15.008 ms | 0 |
| AC_VO | (aCWmin+1)/ 4-1 | (aCWmin+1)/ 2-1 | 2 | 3.264 ms | 2.080 ms | 11.28 ms (BCU: 6 or 7 MHz), 8.46 ms (BCU: 8 MHz) | 15.008 ms | 0 |

As listed in Table 1:

CWmin: It indicates a minimum value of an upper limit of a contention window. A smaller value of the CWmin leads to a higher priority.

CWmax: It indicates a maximum value of the upper limit of the contention window. A smaller value of the CWmax leads to a higher priority.

TXOP limit: It indicates a maximum duration for occupation of a channel.

Arbitration interframe space number (AIFSN): It indicates a number of slots that the STA needs to wait upon detecting channel idleness and waiting for a short interframe space (SIFS) time. Upon the slots, the STA starts a random backoff process. A smaller value of the AIFSN leads to a higher priority.

FIG. 2 is a schematic diagram of a QoS STA that uses four types of ACs to access a channel. It can be seen that due to different AIFSNs, priorities of the AC_VO, the AC_VI, the AC_BE, and the AC_BK gradually decrease.

Additionally, FIG. 2 is also a schematic diagram of a timing of accessing a channel by a non-QoS STA, that is, a traditional DCF mechanism. The DCF mechanism supports two modes. In a first mode, the STA performs transmission immediately upon detecting that a channel is idle for a priority interframe space (PIFS). In a second mode, the STA performs transmission only upon detecting that a channel is idle for a distributed interframe spacing (DIFS) and performing a backoff process. As stipulated in the standard, the first mode is generally only used to transmit some frames with special functions, such as beacon frames, and such frames require a higher transmission priority. In other cases, all STAs use the second mode to access the channel.

It should be noted that in FIG. 2, the QoS STA may be an STA that supports a QoS EDCA mechanism, and the non-QoS STA may be an STA that does not support the QoS EDCA mechanism.

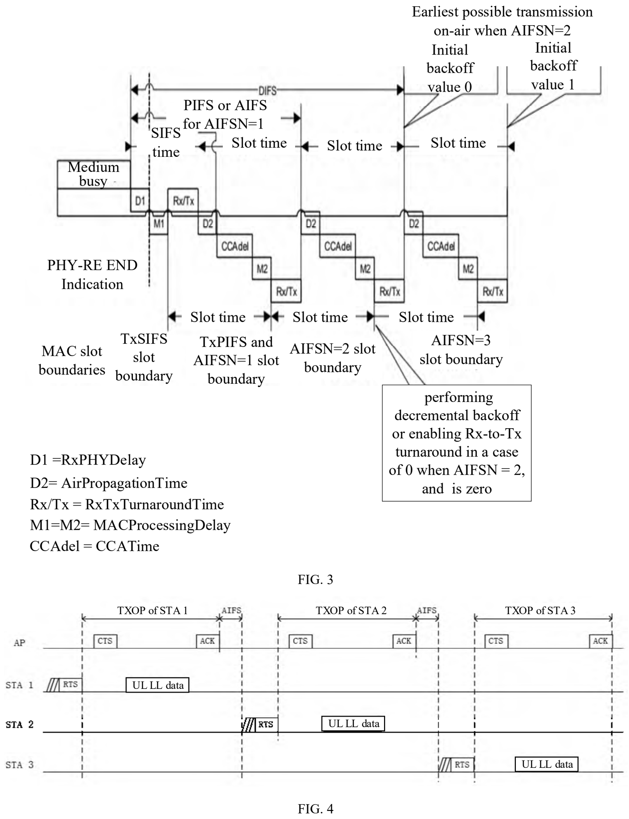

A timing relationship in the PIFS, the DIFS, an arbitration interframe space (AIFS), and the SIFS is illustrated in FIG. 3.

$$PIFS=SIFS +1×aSlotTime.$$

$$DIFS= SIFS+ 2×aSlotTime.$$

$$AIFS=SIFS+AIFSN×aSlotTime.$$

For a better understanding of the embodiments of the present disclosure, procedures of SU UL transmission and MU UL transmission that are related to the present disclosure are described.

The procedure of the SU UL transmission is illustrated in FIG. 4. In FIG. 4, there is an AP and three STAs (non-AP STAs). Each STA needs to perform channel contention through the EDCA mechanism, and then transmits UL low-latency (LL) data and receives an acknowledgement (ACK) frame. The STAs (non-AP STAs) gain a TXOP serially one by one to transmit the UL data. This SU UL data transmission method results in a significant latency and significant latency jitter during the UL transmission because the STA may not contend for the TXOP timely.

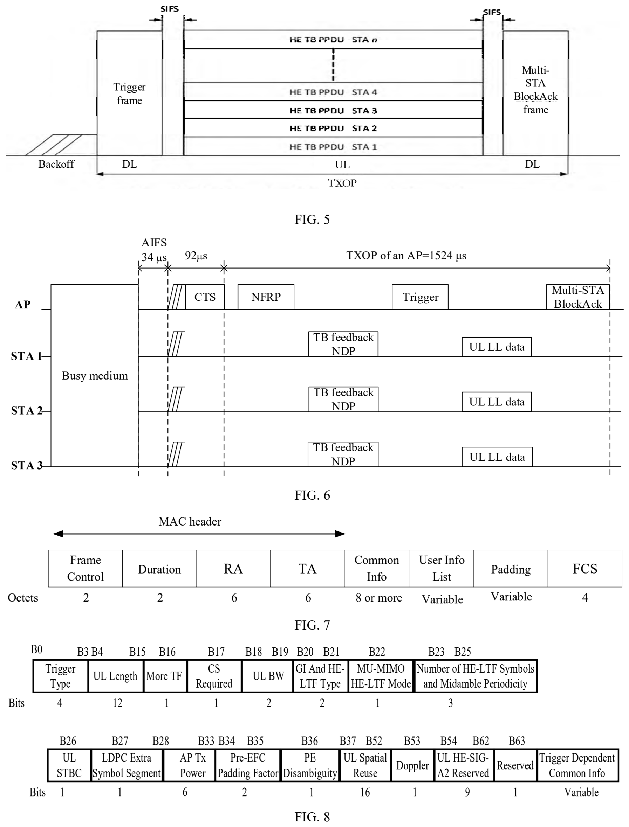

The procedure of the MU UL transmission is illustrated in FIG. 5. In FIG. 5, there is an AP and n STAs (non-AP STAs). Firstly, the AP gains a TXOP through the EDCA mechanism. Secondly, the AP transmits a trigger frame to each STA, and assigns a resource required for UL parallel transmission to each STA. Then, the n STAs (non-AP STAs) concurrently transmit HE TB physical layer protocol data units (PPDUs) based on assigned resources to transmit UL data. Finally, the AP replies the n STAs with a multi-STA block acknowledgement (BlockAck) frame to confirm whether the transmission succeeds. The MU UL transmission method may achieve parallel UL transmission (that is, the UL transmission occupies a same time-domain resource but different frequency-domain and/or spatial-domain resources), and achieve a higher transmission efficiency compared with the SU UL transmission.

For a better understanding of the embodiments of the present disclosure, an NDP feedback report mechanism related to the present disclosure is described.

An IEEE 802.11ax standard defines an MU UL detection mechanism, which enables the AP to detect an STA (non-AP STA) to which a resource needs to be assigned prior to transmitting the trigger frame.

The MU UL detection mechanism in the IEEE 802.11 ax standard also defines two related frame structures: an NFRP trigger frame and an HE TB feedback NDP. The AP transmits the NFRP trigger frame to the non-AP STAs to trigger the non-AP STAs to transmit HE TB feedback NDPs. By parsing the HE TB feedback NDPs, the AP determines which non-AP STAs need to participate in subsequent MU UL transmission.

As illustrated in FIG. 6, the AP transmits the NFRP trigger frame to some non-AP STAs to trigger the non-AP STAs to transmit HE TB feedback NDPs. By parsing the HE TB feedback NDPs, the AP determines which non-AP STAs need to participate in the subsequent MU UL transmission, and then reasonably assign resources to the determined non-AP STAs in a subsequent trigger frame, such that the MU UL transmission is achieved.

For a better understanding of the embodiments of the present disclosure, the NFRP trigger frame related to the present disclosure is described.

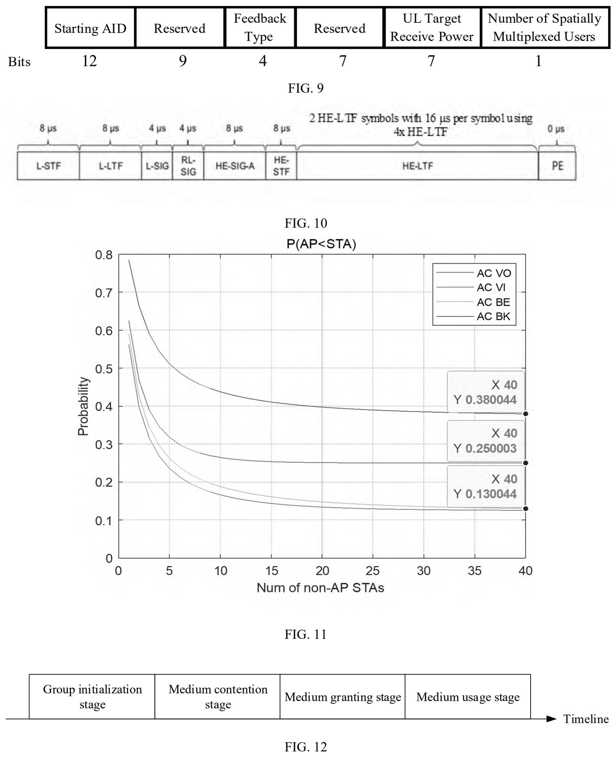

A format of the NFRP trigger frame is illustrated in FIG. 7, a format of a Common Info field is illustrated in FIG. 8, and a format of a User Info List field is illustrated in FIG. 9.

Specifically, as illustrated in FIG. 7, the NFRP trigger frame includes a Frame Control field (occupying two bytes), a Duration field (occupying two bytes), a Receiving Address (RA) field (occupying six bytes), a Transmission Address field (TA) (occupying six bytes), a Common Info field (occupying eight bytes or more), a User Info List field (occupying a variable number of bytes), a Padding field (occupying a variable number of bytes), and field Frame Check Sequence (FCS) field (occupying four bytes).

Specifically, as illustrated in FIG. 8, the Common Info field includes a Trigger Type field (occupying four bits), an UL Length field (occupying 12 bits), a More Trigger Frame (TF) field (occupying one bit), a Carrier Sense (CS) Required field (occupying one bit), an UL BandWidth (BW) field (occupying two bits), a Guard Interval (GI) And High Efficiency Long Training Field (HE-LTF) Type field (occupying two bits), a Multiple Users multi-in multi-out (MU-MIMO) HE-LTF Mode field (occupying one bit), a Number of HE-LTF Symbols and Midamble Periodicity field (occupying three bits), an UL Space Time Block Code (STBC) field (occupying one bit), a Low-Density Parity Check (LDPC) Extra Symbol Segment field (occupying one bit), an AP Transmit Power field (occupying six bits), a Pre-Forward Error Correction (Pre-FEC) Padding Factor field (occupying two bits), a Packet Extension (PE) Disambiguity field (occupying one bit), an UL Spatial Reuse field (occupying 16 bits), a Doppler field (occupying one bit), an UL High Efficiency-SINGAL field-A2 (HE-SIG-A2) Reserved field (occupying nine bits), a Reserved field (occupying one bit), and a Trigger Dependent Common Info field (occupying a variable number of bits).

The UL BW field indicates a bandwidth of an NDP feedback report response. The UL STBC field, the LDPC Extra Symbol Segment field, the Pre-FEC Padding Factor field, the PE Disambiguation field, the UL Spatial Reuse field, and the Doppler field are reserved. The Number of HE-LTF Symbols and Midamble Periodicity field indicates a number of HE-LTF symbols in the NDP feedback report response, which is set to 1. The GI and HE-LTF Type field is set to 2. The Trigger Dependent Common Info field does not exist.

Specifically, as illustrated in FIG. 9, the User Info List field includes a Starting Association Identifier (AID) field (occupying 12 bits), a Reserved field (occupying nine bits), a Feedback Type field (occupying four bits), a Reserved field (occupying seven bits), an UL Target Receive Power field (occupying seven bits), and a Number Of Spatially Multiplexed Users field (occupying one bit).

The Starting AID field defines a first AID within an AID range for a planned response to the NFRP trigger frame. The Feedback Type field indicates a type of feedback information carried by the HE TB feedback NDP. The UL Target Receive Power field indicates expected received signal power that is measured at an antenna connector of the AP and averaged on an antenna. The Number of Spatially Multiplexed Users field indicates a number of STAs that are multiplexed on a same group of subcarriers within a same resource unit (RU), which is encoded as a number of STAs minus 1.

For a better understanding of the embodiments of the present disclosure, the HE TB feedback NDP related to the present disclosure is described.

The HE TB feedback NDP is used to carry NDP feedback report information, and its frame format is illustrated in FIG. 10.

Specifically, the HE TB feedback NDP includes a Legacy Short Training Field (L-STF) field, a Legacy Long Training Field (L-LTF) field, a Legacy Signal (L-SIG) field, a Repeat Legacy Signal (RL-SIG) field, a High Efficiency Signal A (HE-SIG-A) field, a High Efficiency Short Training Field (HE-STF) field, a High Efficiency Long Training Field (HE-LTF) field, and a PE field.

As illustrated in FIG. 10, there are 2 HE-LTF symbols with 16 $\mu$s per symbol using 4x HE-LTF.

Specifically, an HE TB PPDU format is used as an NDP format, without a Data field. A duration of the PE field is 0 microseconds ($\mu$s), and there are two symbols of the 4x HE-LTF type. A used GI is 3.2 $\mu$s. A duration of a 1x HE-LTF symbol is 3.2 $\mu$s, a duration of a 2x HE-LTF symbol is 6.4 $\mu$s, and a duration of a 4x HE-LTF symbol is 12.8 $\mu$s. The above duration does not include the GI.

Specifically, each RU_TONE_SET_INDEX in the HE-LTF field is used to identify an AID and feedback information (FEEDBACK_STATUS) of a non-AP STA. The TONG is also referred to as a subcarrier. Specifically, an HE-LTF subcarrier mapping relationship in the HE TB feedback NDP is listed in Table 2.

Table 2

| RU_TONE_SET_INDEX | 80MHz | | 40 MHz | | 20 MHz | |
|---|---|---|---|---|---|---|
| | $K_{tone\_NDPu}$ if FEEDBACK_ STATUS is 1 | $K_{tone\_NDPu}$ if FEEDBACK_ STATUS is 0 | $K_{tone\_NDPu}$ if FEEDBACK_ STATUS is 1 | $K_{tone\_NDPu}$ if FEEDBACK_ STATUS is 0 | $K_{tone\_NDPu}$ if FEEDBACK_ STATUS is 1 | $K_{tone\_NDPu}$ if FEEDBACK_ STATUS is 0 |
| 1 | | | | | −113, −77, −41, 6, 42, 78 | −112, −76, −40, 7, 43, 79 |
| 2 | | | | | −111, −75, −39, 8, 44, 80 | −110, −74, −38, 9, 45, 81 |
| 3 | | | | | −109, −73, −37, 10, 46, 82 | −108, −72, −36, 11, 47, 83 |
| 4 | | | | | −107, −71, −35, 12, 48, 84 | −106, −70, −34, 13, 49, 85 |
| 5 | | | | | −105, −69, −33, 14, 50, 86 | −104, −68, −32, 15, 51, 87 |
| 6 | | | | | −103, −67, −31, 16, 52, 88 | −102, −66, −30, 17, 53, 89 |
| 7 | Use 20MHz FEEDBACK _STATUS = 1 Subcarrier Indices -384 | Use 20MHz FEEDBACK _STATUS = 0 Subcarrier Indices -384 | Use 20MHz FEEDBACK _STATUS = 1 Subcarrier Indices -128 | Use 20MHz FEEDBACK _STATUS = 0 Subcarrier Indices -128 | −101, −65, −29, 18, 54, 90 | −100, −64, −28, 19, 55, 91 |
| 8 | | | | | −99, −63, −27, 20, 56, 92 | −98, −62, −26, 21, 57, 93 |
| 9 | | | | | −97, −61, −25, 22, 58, 94 | −96, −60, −24, 23, 59, 95 |
| 10 | | | | | −95, −59, −23, 24, 60, 96 | −94, −58, −22, 25, 61, 97 |
| 11 | | | | | −93, −57, −21, 26, 62, 98 | −92, −56, −20, 27, 63, 99 |
| 12 | | | | | −91, −55, −19, 28, 64, 100 | −90, −54, −18, 29, 65, 101 |
| 13 | | | | | −89, −53, −17, 30, 66, 102 | −88, −52, −16, 31, 67, 103 |
| 14 | | | | | −87, −51, −15, 32, 68, 104 | −86, −50, −14, 33, 69, 105 |
| 15 | | | | | −85, −49, −13, 34, 70, 106 | −84, −48, −12, 35, 71, 107 |
| 16 | | | | | −83, −47, −11, 36, 72, 108 | −82, −46, −10, 37, 73, 109 |

| | | | | | |
|---|---|---|---|---|---|
| 17 | | | | | −81, −45, −9, 38, 74, 110 | −80, −44, −8, 39, 75, 111 |
| 18 | | | | | −79, −43, −7, 40, 76, 112 | −78, −42, −6, 41, 77, 113 |
| 19-36 | Use 20MHz FEEDBACK _STATUS = 1 Subcarrier Indices -128 | Use 20MHz FEEDBACK _STATUS = 0 Subcarrier Indices -128 | Use 20MHz FEEDBACK _STATUS = 1 Subcarrier Indices +128 | Use 20MHz FEEDBACK _STATUS = 0 Subcarrier Indices +128 | | |
| 37-54 | Use 20MHz FEEDBACK _STATUS = 1 Subcarrier Indices +128 | Use 20MHz FEEDBACK _STATUS = 0 Subcarrier Indices +128 | | | | |
| 55-72 | Use 20MHz FEEDBACK _STATUS = 1 Subcarrier Indices +384 | Use 20MHz FEEDBACK _STATUS = 0 Subcarrier Indices +384 | | | | |
| The RU_TONE_SET_INDEX for 80+80 MHz and 160 MHz shall use the 80 MHz RU_TONE_SET_INDEX definition for the lower and upper 80 MHz. The RU_TONE_SET_INDEX values 1–72 are mapped to the lower 80 MHz, and the RU_TONE_SET_INDEX values 73–144 are mapped to the upper 80 MHz. | | | | | |

Simply speaking, in a case where the Number of Spatially Multiplexed Users field in the NFRP trigger frame is set to 0, each RU_TONE_SET_INDEX corresponds to one non-AP STA (AID). In a case where a BW is 20 MHz, for a non-AP STA with RU_TONE_SET_INDEX=1, FEEDBACK_STATUS=1 indicates that -113th, -77th, -41st, 6th, 42nd, and 78th subcarriers in an HE-LTF have energy and other subcarriers have no energy; and FEEDBACK_STATUS=0 indicates that -112th, -76th, -40th, 7th, 43rd, and 79th subcarriers in the HE-LTF have energy and other subcarriers have no energy. In a case where the BW is 40 MHz or 80 MHz, a subcarrier mapping relationship of 20 MHz is expanded by 1 times and 3 times to map more non-AP STAs (AIDs). In a case where the Number of Spatially Multiplexed Users field in the NFRP trigger frame is set to 1, each RU_TONE_SET_INDEX corresponds to two non-AP STAs (AIDs), and the two non-AP STAs are distinguished using pre-assigned different precoding matrices.

For a better understanding of the embodiments of the present disclosure, single-protection and multi-protection that are related to the present disclosure are described.

A Duration/ID field located in a frame header of a MAC frame is used to set a network allocation vector (NAV) for an STA that receives the MAC frame. For the STA that receives the MAC frame, a channel is busy within a NAV time.

Two types of duration are set for a TXOP initiated under the EDCA mechanism, that is, the single-protection and the multi-protection. In the single-protection, a time length indicated by the NAV only includes a data frame, a management frame, or a response frame transmitted next and any additional overhead frame. In the multi-protection, the NAV indicates that the time includes a plurality of frames that are transmitted and received next.

For understanding of the technical solutions according to the embodiments of the present disclosure, problems solved in the present disclosure are described.

In an industrial scenario, devices in a factory generally need to be connected through a network to form an IoT network to enhance coordination in different production devices and achieve a higher degree of automation. Compared with other methods for wireless communication, the Wi-Fi has advantages of spectrum unlicensed, wide popularity, and a high throughput. However, the existing channel access mechanism EDCA in the Wi-Fi is not applicable to an industrial IoT scenario of numerous STA devices. This is because there are two UL data transmission methods in the Wi-Fi, that is, SU UL transmission and MU UL transmission. In the SU UL transmission, a transmitter STA is required to gain a TXOP. In the MU UL transmission, an AP is required to gain the TXOP. Otherwise, the STA cannot transmit the UL data. However, a probability that an STA acquires the TXOP and a probability that the AP acquires the TXOP gradually decrease as a total number of STAs increases, and converge to a relatively small fixed value. A probability that the STA or the AP acquires the TXOP in the channel contention is illustrated in FIG. 11. Therefore, in a case of a large number of STAs, both a probability that the STA performs the SU UL transmission and a probability that the AP performs the MU UL transmission are very low. As a result, the UL data cannot to be transmitted promptly, thereby causing a significant latency and significant latency jitter.

A reason for this problem is that the existing EDCA mechanism does not consider the MU UL transmission in initial design. A prerequisite for the MU UL transmission is that the AP acquires the TXOP. However, under the EDCA mechanism, as a number of non-AP STAs increases, more STAs need to transmit UL data. Consequently, the probability that the AP acquires the TXOP is smaller, which causes a less probability of the MU UL transmission, and a transmission latency of the UL data is larger.

Based on the above problem, the present disclosure provides an EDCA enhancement scheme with an STA grouping function. In the channel contention, the STA grouping function is introduced, such that the assignment of the TXOP is more efficient, the usage frequency of the MU UL transmission increases, the latency of transmission of UL and DL data is reduced, and the latency jitter is alleviated.

The embodiments of the present disclosure enhance the EDCA mechanism to reduce the latency of UL data transmission in the industrial scenario. The enhanced EDCA scheme consists of four stages illustrated in FIG. 12, that is, group initialization, medium contention, medium granting, and medium usage. In the group initialization stage, the AP assigns STAs with similar service periods to different STA groups based on service patterns of the STAs acquired through statistics. In the medium contention stage, an STA that needs to transmit an LL service transmits a specific frame according to a rule to contend for the TXOP. In the medium granting stage, the AP replies with different frames based on an MU UL detection result to grant the TXOP to a specific STA or the AP itself. In the medium usage stage, the STA that gains the TXOP needs to execute a specific transmission procedure according to a rule.

For understanding of the technical solutions according to the embodiments of the present disclosure, the technical solutions according to the present disclosure are described in detail hereinafter through specific embodiments. The following related technologies, as optional solutions, may be arbitrarily combined with the technical solutions according to the embodiments of the present disclosure, and all fall within the scope of protection of the embodiments of the present disclosure. The embodiments of the present disclosure include at least part of following content.

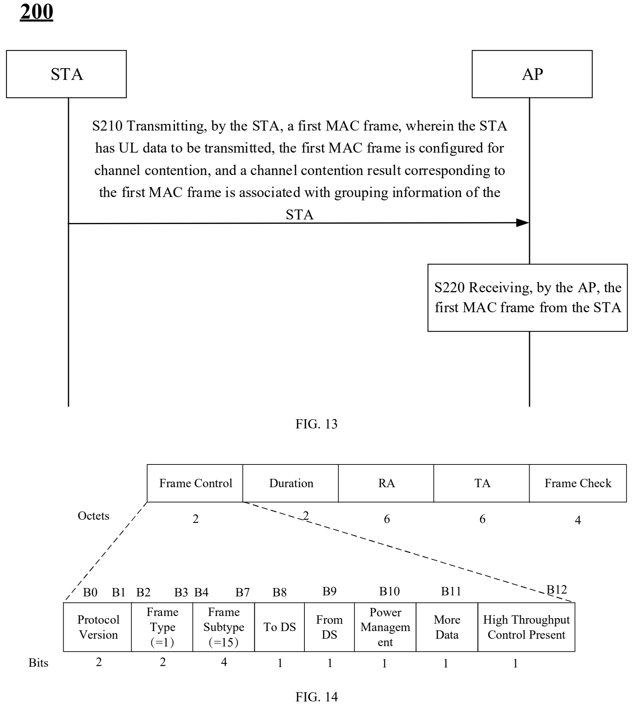

FIG. 13 is a schematic flowchart of a method 200 for wireless communication according to some embodiments of the present disclosure. The method 200 for wireless communication is performed by an STA and an AP interactively. The STA may be the STA (non-AP STA) illustrated in FIG. 1, and the AP may be the AP illustrated in FIG. 1. The STA has UL data to be transmitted. Specifically, as illustrated in FIG. 13, the method 200 for wireless communication may include at least part of following processes.

In S210, the STA transmits a first MAC frame, wherein the STA has the UL data to be transmitted, the first MAC frame is configured for channel contention, and a channel contention result corresponding to the first MAC frame is associated with grouping information of the STA.

In S220, the AP receives the first MAC frame from the STA.

It can be understood that FIG. 13 shows processes or operations of the method 200 for wireless communication, but these processes or operations are only examples, and other operations or variants of the operations in FIG. 13 may be performed in the embodiments of the present disclosure.

In the embodiments of the present disclosure, a term "field" may also be referred to as "subfield". One field may occupy at least one byte/octet, or may occupy at least one bit.

In the embodiments of the present disclosure, a term "medium" may also be referred to as "channel", and they are interchangeable.

It should be noted that there are two UL data transmission methods in Wi-Fi, that is, SU UL transmission and MU UL transmission. In the SU UL transmission, a transmitter STA is required to gain a TXOP. In the MU UL transmission, the AP is required to gain the TXOP. However, in an industrial scenario, there are generally a large number of STAs, that is, there are many devices participating in EDCA channel contention., such that the probability for the STA or the AP to gain the TXOP is low, the UL data cannot be transmitted timely, and a significant latency and significant latency jitter are caused. Based on the above problem, the embodiments of the present disclosure provide an enhanced EDCA scheme with an STA grouping function. In a case where any STA in a group is about to gain the TXOP, the AP forcibly gains the TXOP and then execute an efficient MU UL procedure to quickly satisfy UL data transmission requirements of a plurality of STAs with similar occurrence cycles and reduce the latency.

In some embodiments, the UL data in the embodiments of the present disclosure at least incudes UL latency-sensitive data. The UL data in the embodiments of the present disclosure may also include other data, such as non-latency-sensitive data.

It should be noted that latency-sensitive data may also be referred to as LL data, which is not limited in the embodiments of the present disclosure.

In some embodiments, the first MAC frame is a G-RTS frame. The first MAC frame may also be another frame, or the first MAC frame may be a newly-defined MAC frame.

For example, the first MAC frame is the G-RTS frame. As illustrated in FIG. 14, a Frame Control field in the G-RTS frame includes a Protocol Version field, a Frame Type field (=1), a Frame Subtype field (=15), a To Distribution System (to DS) field, a From DS field, a Power Management field, a More Data field, and a High Throughput Control Present field. The Protocol Version field indicates a version of a MAC frame. In a case where a value of the Frame Type field is 1, the frame is a control frame. In a case where a value of the Frame Subtype field is 15, the first MAC frame is a newly-defined G-RTS frame. Both the To DS field and the From DS field are set to 0, has and have no meaning. The Power Management field indicates a power management mode of the STA. The More Data field indicates that there is to-be-transmitted data in a buffer of an STA in an energy-saving mode. The High Throughput Control Present field indicates whether the frame includes the High Throughput Control Present field. A Duration field indicates a value of an NAV to protect a medium from being preempted. An RA field indicates an address of an STA receiving the frame. A TA field indicates an address of the STA transmitting the frame. A FCS field is used to check whether the Frame Control field is correctly transmitted.

In some embodiments, m STA groups are pre-assigned. m is a positive integer, and m=1 or m≥2. For example, at least one STA associated with the same AP form one STA group. At least one STA group exist simultaneously, and each STA group has a unique identifier (ID), that is, an STA group ID.

For example, the AP pre-assigns the m STA groups, or a physical AP MLD to which the AP belongs pre-assigns the m STA groups, or a virtual AP MLD to which the AP belongs pre-assigns the m STA groups.

In some embodiments, in a case where m≥2, STAs with a same service period or similar service periods belong to different STA groups in the m STA groups. For example, the AP assigns STAs with similar service periods to different STA groups based on service patterns of the STAs acquired through statistics.

In some embodiments, the grouping information of the STA includes, but is not limited to, at least one of:

information indicating whether the STA belongs to an STA group in the m STA groups; or
an ID of an STA group to which the STA belongs and/or a number of STAs in the STA group to which the STA belongs in a case where the STA belongs to an STA group in m STA groups.

In some embodiments, the grouping information of the STA is associated with a first field in the first MAC frame. That is, the grouping information of the STA is acquired based on the first field in the first MAC frame. Specifically, the grouping information of the STA is directly or indirectly acquired based on the first field in the first MAC frame.

In some embodiments, the first field is used to identify an identity of the STA. That is, the AP may directly acquire the grouping information of the STA based on the first field in the first MAC frame. In some embodiments, the first field is the TA field or any other address ID field. For example, the AP identifies the identity of the STA based on the TA field or the any other address ID field in the received first MAC frame, as illustrated in FIG. 14. Then, the AP replies with different CTS frames based on whether the STA belongs to an STA group and a number of STA devices in the STA group, and grants the TXOP to the STA or the AP.

In some embodiments, the first field is used to indicate the grouping information of the STA. That is, the AP may directly acquire the grouping information of the STA based on the first field in the first MAC frame.

In some embodiments, that the channel contention result corresponding to the first MAC frame is associated with the grouping information of the STA includes:

in a case where the STA belongs to a first STA group in the m STA groups, and a number of STAs in the first STA group is less than a first threshold, a TXOP associated with the channel contention corresponding to the first MAC frame belongs to the STA; and/or
in a case where the STA belongs to the first STA group in the m STA groups, and the number of STAs in the first STA group is greater than or equal to the first threshold, the TXOP associated with the channel contention corresponding to the first MAC frame belongs to the AP; and/or
in a case where the STA does not belong to any STA group in the m STA groups, the TXOP associated with the channel contention corresponding to the first MAC frame belongs to the STA.

In some embodiments, that the channel contention result corresponding to the first MAC frame is associated with the grouping information of the STA includes:

in a case where the STA belongs to a first STA group in the m STA groups, and a number of STAs in the first STA group is less than or equal to a first threshold, a TXOP associated with the channel contention corresponding to the first MAC frame belongs to the STA; and/or

in a case where the STA belongs to the first STA group in the m STA groups, and the number of STAs in the first STA group is greater than the first threshold, the TXOP associated with the channel contention corresponding to the first MAC frame belongs to the AP; and/or

in a case where the STA does not belong to any STA group in the m STA groups, the TXOP associated with the channel contention corresponding to the first MAC frame belongs to the STA.

For example, in a case where the STA does not belong to the any STA group in the m STA groups, the AP returns a CTS frame to the STA, and declares that the TXOP belongs to the STA. That is, the TXOP associated with the channel contention corresponding to the first MAC frame belongs to the STA.

For example, in a case where the STA belongs to the first STA group in the m STA groups, and the number of STAs in the first STA group is less than or equal to the first threshold, the AP returns a CTS frame to the STA, and declares that the TXOP belongs to the STA. That is, the TXOP associated with the channel contention corresponding to the first MAC frame belongs to the STA.

For example, in a case where the STA belongs to the first STA group in the m STA groups, and the number of STAs in the first STA group is greater than or equal to the first threshold, the AP transmits a CTS-to-self frame, and declares that the TXOP belongs to the AP. That is, the TXOP associated with the channel contention corresponding to the first MAC frame belongs to the STA.

In some embodiments, the first threshold may be specified by a protocol, or the first threshold may be configured by the AP, or the first threshold may be configured by the physical AP MLD to which the AP belongs, or the first threshold may be configured by the virtual AP MLD to which the AP belongs.

In some embodiments, a TXOP used by the STA is a single-protection TXOP or a length-limited multi-protection TXOP, and/or a TXOP used by an AP corresponding to the STA is a single-protection TXOP or a length-limited multi-protection TXOP.

For example, the STA and the AP use the single-protection TXOP or the length-limited multi-protection TXOP.

In some embodiments, the TXOP used by the STA is the single-protection TXOP or the length-limited multi-protection TXOP, and/or the TXOP used by the AP corresponding to the STA is the single-protection TXOP or a multi-protection TXOP.

For example, the STA uses the single-protection TXOP or the length-limited multi-protection TXOP, and the AP uses any type of TXOP.

In some embodiments, in a case where the TXOP associated with the channel contention corresponding to the first MAC frame belongs to the AP, part or all of the STAs in the first STA group transmit the UL data within the TXOP upon receiving a trigger frame from the AP.

For example, upon acquiring the TXOP, the AP transmits the trigger frame to the part or all of the STAs in the first STA group, then receives TB PPDUs to acquire the UL data, and replies with a block acknowledgement (BlockAck) frame or a Multi-STA BlockAck frame.

In some embodiments, in a case where the TXOP associated with the channel contention corresponding to the first MAC frame belongs to the AP, the part or all of the STAs in the first STA group transmit the UL data, and receive DL data within the TXOP upon receiving the trigger frame from the AP. For example, the AP receives the UL data and then transmits the DL data, or transmits the DL data and then receives the UL data.

For example, upon acquiring the TXOP, the AP transmits the trigger frame to the part or all of the STAs in the first STA group, then receives the TB PPDUs to acquire the UL data, and replies with the BlockAck frame or the Multi-STA BlockAck frame. Further, in a case where the AP uses the multi-protection TXOP or the length-limited multi-protection TXOP, and a duration of the TXOP is sufficient, the AP may transmit DL SU data or DL MU data within the TXOP, and receive a corresponding ACK frame or BlockAck frame. The AP may receive the UL data and then transmit the DL data, or may transmit the DL data and then receive the UL data.

In some embodiments, in a case where the TXOP associated with the channel contention corresponding to the first MAC frame belongs to the AP, the part or all of the STAs in the first STA group feed back UL buffer status information (for example, a buffer status report (BSR)) upon receiving an NFRP trigger frame from the AP, and resources used by the part or all of the STAs in the first STA group to transmit the UL data within the TXOP are associated with the UL buffer status information fed back by the part or all of the STAs in the first STA group.

For example, upon acquiring the TXOP, the AP may transmit the NFRP trigger frame to query UL LL buffer status information (such as BSRs) of part or all of the STAs in a related STA group, and then assigne a resource based on the UL LL buffer status information for the MU UL transmission.

In some embodiments, in the group initialization stage illustrated in FIG. 12, at least one STA associated with a same AP form one STA group. At least one STA group exist simultaneously, and each STA group has a unique ID, that is, an STA group ID.

In some embodiments, in the medium contention stage illustrated in FIG. 12, an STA that needs to transmit UL data follows an EDCA mechanism for the channel contention. In a case where the STA allows the AP to change granting of the TXOP based on grouping information, the STA contends for a channel by transmitting a specific frame (that is, the first MAC frame); otherwise, the STA cannot use the specific frame (that is, the first MAC frame) to contend for the channel.

In some embodiments, in the medium granting stage illustrated in FIG. 12, the AP identifies an identity of the STA based on a TA field or any other address ID field in the received specific frame (that is, the first MAC frame), and then replies with different CTS frames based on whether the STA belongs to an STA group and a number of STA devices in the STA group, thereby granting the TXOP to the STA or the AP.

For example, in a case where the STA does not belong to any STA group, the AP returns the CTS frame to the STA, and declares that the TXOP belongs to the STA. For another example, in a case where the AP detects that the STA belongs to an STA group, and a number of STAs in the STA group is less than or equal to the first threshold, the AP transmits the CTS frame to the STA, and declares that the TXOP belongs to the STA. For another example, in a case where the AP detects that the STA belongs to an STA group, and a number of STAs in the STA group is greater than or equal to the first threshold, the AP transmits the CTS-to-self frame, and declares that the TXOP belongs to the AP.

In some embodiments, in the medium usage stage illustrated in FIG. 12, the STA and the AP must use the single-protection TXOP or the length-limited multi-protection TXOP. In some other embodiments, the STA must use the single-protection TXOP or the length-limited multi-protection TXOP, and the AP can use any type of TXOP.

In some embodiments, in the medium usage stage illustrated in FIG. 12, upon acquiring the TXOP, the AP should transmit the trigger frame to part or all of the STAs in the STA group, then receives TB PPDUs to acquire UL data, and replies with the BlockAck frame or the Multi-STA BlockAck frame. Further, in a case where the AP uses the multi-protection TXOP or the length-limited multi-protection TXOP, and the duration of the TXOP is sufficient, the AP may transmit the DL SU data or the DL MU data within the TXOP, and receive the corresponding ACK frame or BlockAck frame. The AP may receive the UL data and then transmit the DL data, or may transmit the DL data and then receive the UL data.

Therefore, in the embodiments of the present disclosure, the STA grouping function is introduced in the channel contention, such that the assignment of the TXOP is more efficient, the usage frequency of MU UL transmission increases, a latency of transmission of UL and DL data is reduced, and latency jitter is alleviated.

The technical solutions according to the present disclosure are described hereinafter in detail with reference to specific embodiments.

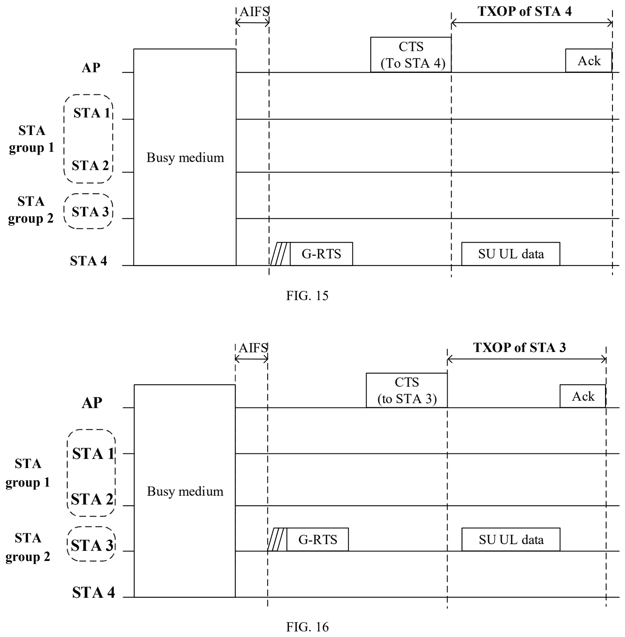

In Embodiment 1, it is assumed that a WLAN includes an AP and four STAs (STA 1, STA 2, STA 3, and STA 4). In a case where the AP uses a single-protection TXOP, the STAs also use the single-protection TXOP. STA 1 and STA 2 belong to STA group 1, STA 3 belongs to STA group 2, and STA 4 does not belong to any STA group. In a case where the STAs all use AC_VO in EDCA, frame interaction between the AP and the STAs is illustrated in FIG. 15.

Specifically, as illustrated in FIG. 15, STA 4 first transmits a G-RTS frame after a channel is idle for an AIFS. Upon receiving the G-RTS frame, the AP finds that STA 4 does not belong to the any STA group, and therefore returns a CTS frame to STA 4 and grants a TXOP to STA 4. Upon receiving the CTS frame from the AP, the STA 4 finds that an RA of the CTS frame is its own address, and therefore determines successful channel contention and determines that STA 4 possesses the TXOP. Subsequently, within the TXOP of STA 4, STA 4 transmits SU UL data to the AP, and the AP returns an ACK frame to STA 4 to confirm successful transmission. In this case, the TXOP of STA 4 ends, and the channel re-enters an idle state.

In Embodiment 2, it is assumed that a WLAN includes an AP and four STAs (STA 1, STA 2, STA 3, and STA 4). In a case where the AP uses a single-protection TXOP, the STAs also use the single-protection TXOP. STA 1 and STA 2 belong to STA group 1, STA 3 belongs to STA group 2, and STA 4 does not belong to any STA group. In a case where the STAs all use AC_VO in EDCA, frame interaction between the AP and the STAs is illustrated in FIG. 16.

Specifically, as illustrated in FIG. 16, STA 3 first transmits a G-RTS frame after a channel is idle for an AIFS. Upon receiving the G-RTS frame, the AP finds that STA 3 belongs to STA group 2 and STA group 2 only includes one STA, and therefore returns a CTS frame to STA 3 and grants a TXOP to STA 3. Upon receiving the CTS frame from the AP, STA 3 finds that an RA of the CTS frame is its own address, and therefore determines successful channel contention and determines that STA 3 possesses the TXOP. Subsequently, within the TXOP of STA 3, STA 3 transmits SU UL data to the AP, and the AP returns an ACK frame to STA 3 to confirm successful transmission. In this case, the TXOP of STA 3 ends, and the channel re-enters an idle state.

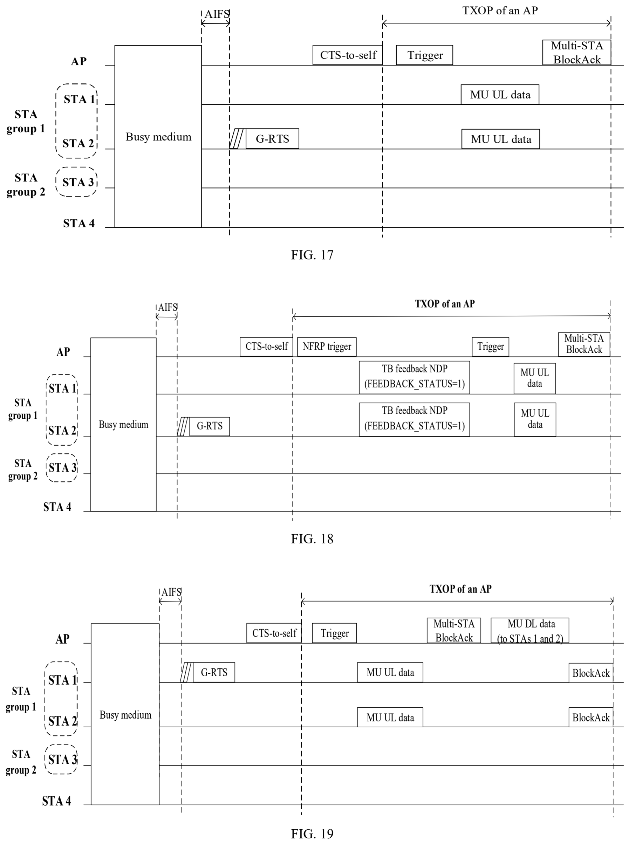

In Embodiment 3, it is assumed that a WLAN includes an AP and four STAs (STA 1, STA 2, STA 3, and STA 4). In a case where the AP uses a single-protection TXOP, the STAs also use the single-protection TXOP. STA 1 and STA 2 belong to group 1, STA 3 belongs to STA group 2, and STA 4 does not belong to any STA group. In a case where the STAs all use AC_VO in EDCA, frame interaction between the AP and the STAs is illustrated in FIG. 17.

Specifically, as illustrated in FIG. 17, STA 2 first transmits a G-RTS frame after a channel is idle for an AIFS. Upon receiving the G-RTS frame, the AP finds that STA 2 belongs to STA group 1 and STA group 2 includes two STAs, and therefore replies with a CTS-to-self frame and grants a TXOP to itself. Upon receiving a CTS frame from the AP, STA 3 finds that an RA of the CTS frame is not its own address but an address of the AP, and therefore determines failure of channel contention and determines that the TXOP belongs to the AP. Subsequently, within the TXOP of the AP, the AP transmits a trigger frame to STA 1 and STA 2 to trigger STA 1 and STA 2 to simultaneously transmit a TB PPDU carrying MU UL data, and replies with a Multi-STA BlockAck frame to confirm successful transmission.

In Embodiment 4, it is assumed that a WLAN includes an AP and four STAs (STA 1, STA 2, STA 3, and STA 4). In a case where the AP uses a single-protection TXOP, the STAs also use the single-protection TXOP. STA 1 and STA 2 belong to STA group 1, STA 3 belongs to STA group 2, and STA 4 does not belong to any STA group. In a case where the STAs all use AC_VO in EDCA, frame interaction between the AP and the STAs is illustrated in FIG. 18.

Specifically, as illustrated in FIG. 18, STA 2 first transmits a G-RTS frame after a channel is idle for an AIFS. Upon receiving the G-RTS frame, the AP finds that STA 2 belongs to STA group 1 and STA group 2 includes two STAs, and therefore replies with a CTS-to-self frame and grants a TXOP to itself. Upon receiving a CTS frame from the AP, STA 3 finds that an RA of the CTS frame is not its own address but an address of the AP, and therefore determines failure of channel contention and determines that the TXOP belongs to the AP.

Subsequently, within the TXOP of the AP, the AP transmits an NFRP trigger frame to part or all of the STAs in STA group 1 to further confirm an UL LL service buffer status in STA group 1, and receives TB feedback NDPs, thereby confirming that STA 1 and STA 2 in STA group 1 need to transmit an UL LL service. Subsequently, the AP transmits a trigger frame to STA 1 and STA 2 to trigger STA 1 and STA 2 to simultaneously transmit a TB PPDU carrying MU UL data, and replies with a Multi-STA BlockAck frame to confirm successful transmission.

In Embodiment 5, it is assumed that a WLAN includes an AP and four STAs (STA 1, STA 2, STA 3, and STA 4). In a case where the AP uses a multi-protection TXOP, the STAs use a single-protection TXOP. STA 1 and STA 2 belong to STA group 1, STA 3 belongs to STA group 2, and STA 4 does not belong to any STA group. In a case where the STAs all use AC_VO in EDCA, frame interaction between the AP and the STAs is illustrated in FIG. 19.

Specifically, as illustrated in FIG. 19, STA 1 first transmits a G-RTS frame after a channel is idle for an AIFS. Upon receiving the G-RTS frame, the AP finds that STA 1 belongs to STA group 1 and STA group 2 includes two STAs, and therefore replies with a CTS-to-self frame and grants a TXOP to itself. Upon receiving a CTS frame from the AP, STA 1 finds that an RA of the CTS frame is not its own address but an address of the AP, and therefore determines failure of channel contention and determines that the TXOP belongs to the AP. Subsequently, within the TXOP of the AP, the AP transmits a trigger frame to STA 1 and STA 2 to trigger STA 1 and STA 2 to simultaneously transmit a TB PPDU carrying MU UL data, and replies with a Multi-STA BlockAck frame to confirm successful transmission. Afterwards, the AP transmits MU DL data to STA 1 and STA 2. STA 1 and STA 2 each reply with a BlockAck frame through a TB PPDU to confirm the successful transmission. In this case, the TXOP of the AP ends, and the channel re-enters an idle state.

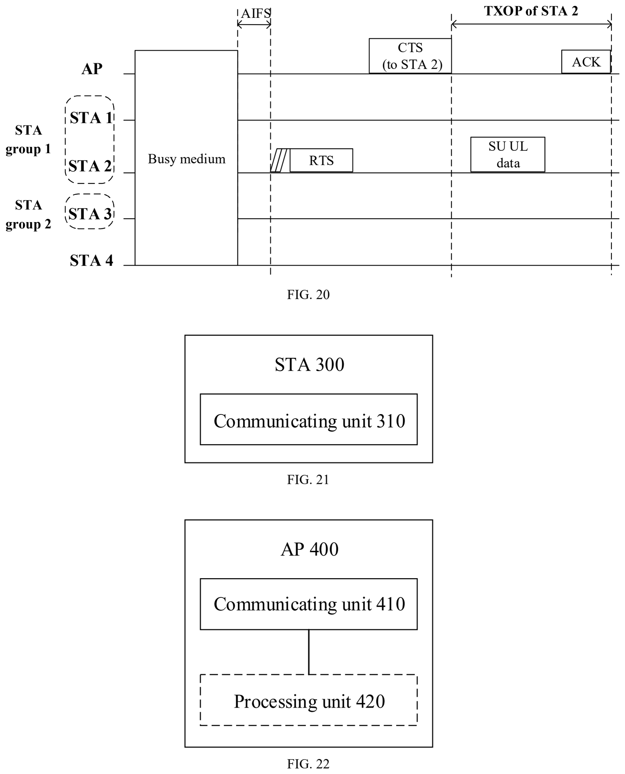

In Embodiment 6, it is assumed that a WLAN includes an AP and four STAs (STA 1, STA 2, STA 3, and STA 4). In a case where the AP uses a single-protection TXOP, the STAs also use the single-protection TXOP. STA 1 and STA 2 belong to STA group 1, STA 3 belongs to STA group 2, and STA 4 does not belong to any STA group. In a case where the STAs all use AC_VO in EDCA, frame interaction between the AP and the STAs is illustrated in FIG. 20.

Specifically, as illustrated in FIG. 20, STA 2 first transmits an RTS frame after a channel is idle for an AIFS. Upon receiving the RTS frame, the AP finds that the RTS frame is not a G-RTS frame, and therefore does not trigger any grouping-related rule mentioned in the present disclosure, but determines an ownership of the TXOP according to a rule of the EDCA. Therefore, the AP returns a CTS frame to STA 2 and grants the TXOP to STA 2. Upon receiving the CTS frame from the AP, STA 2 finds that an RA of the CTS frame is its own address, and therefore determines successful channel contention for the TXOP. Subsequently, within the TXOP of STA 2, STA 2 transmits SU UL data to the AP, and the AP replies with an ACK frame to confirm successful transmission.

The method embodiments of the present disclosure are described in detail above with reference to FIG. 13 to FIG. 20. The apparatus embodiments of the present disclosure are described in detail hereinafter with reference to FIG. 21 to FIG. 25. It should be understood that the apparatus embodiments correspond to the method embodiments. For similar descriptions, reference may be made to the method embodiments.

FIG. 21 is a schematic block diagram of an STA 300 according to some embodiments of the present disclosure. The STA 300 has UL data to be transmitted. As illustrated in FIG. 21. The STA 300 includes:

a communicating unit 310, configured to transmit a first MAC frame, wherein the first MAC frame is configured for channel contention, and a channel contention result corresponding to the first MAC frame is associated with grouping information of the STA.

In some embodiments, the grouping information of the STA includes at least one of:

information indicating whether the STA belongs to an STA group in m STA groups; and
an ID of an STA group to which the STA belongs and/or a number of STAs in the STA group to which the STA belongs in a case where the STA belongs to an STA group in m STA groups.

The m STA groups are preassigned, m is a positive integer, and m=1 or m ≥ 2.

In some embodiments, that the channel contention result corresponding to the first MAC frame is associated with the grouping information of the STA includes:

in a case where the STA belongs to a first STA group in the m STA groups, and a number of STAs in the first STA group is less than a first threshold, a TXOP associated with the channel contention corresponding to the first MAC frame belongs to the STA; and/or

in a case where the STA belongs to a first STA group in m STA groups, and a number of STAs in the first STA group is greater than or equal to a first threshold, a TXOP associated with the channel contention corresponding to the first MAC frame belongs to the AP; and/or

in a case where the STA does not belong to any STA group in m STA groups, a TXOP associated with the channel contention corresponding to the first MAC frame belongs to the STA.

The m STA groups are pre-assigned, m is the positive integer, and m=1 or m ≥ 2.

In some embodiments, in a case where the TXOP associated with the channel contention corresponding to the first MAC frame belongs to the AP, part or all of the STAs in the first STA group transmit UL data within the TXOP upon receiving a trigger frame from the AP.

In some embodiments, in a case where the TXOP associated with the channel contention corresponding to the first MAC frame belongs to the AP, the part or all of the STAs in the first STA group transmit the UL data and receive DL data within the TXOP upon receiving the trigger frame from the AP.

In some embodiments, in a case where the TXOP associated with the channel contention corresponding to the first MAC frame belongs to the AP, part or all of the STAs in the first STA group feed back UL buffer status information upon receiving an NFRP trigger frame from the AP, and resources used by the part or all of the STAs in the first STA group to transmit the UL data within the TXOP are associated with the UL buffer status information fed back by the part or all of the STAs in the first STA group.

In some embodiments, in a case where m≥2, STAs with a same service period or similar service periods belong to different STA groups in the m STA groups.

In some embodiments, the grouping information of the STA is associated with a first field in the first MAC frame.

In some embodiments, the first field is used to identify an identity of the STA.

In some embodiments, the first field is used to indicate the grouping information of the STA.

In some embodiments, a TXOP used by the STA is a single-protection TXOP or a length-limited multi-protection TXOP, and/or a TXOP used by an AP corresponding to the STA is a single-protection TXOP or a length-limited multi-protection TXOP.

In some embodiments, a TXOP used by the STA is a single-protection TXOP or a length-limited multi-protection TXOP, and/or a TXOP used by an AP corresponding to the STA is a single-protection TXOP or a multi-protection TXOP.

In some embodiments, the UL data at least incudes UL latency-sensitive data.

In some embodiments, the first MAC frame is a G-RTS frame.

In some embodiments, the communicating unit may be a communication interface or a transceiver, or may be an input/output interface of a communication chip or an SOC. The processing unit may be at least one processor.

It should be understood that the STA 300 in the embodiments of the present disclosure may correspond to the STA in the method embodiments of the present disclosure, and the foregoing and other operations and/or functions of the units in the STA 300 are for implementing a corresponding process of the STA in the method 200 for wireless communication illustrated in FIG. 13. For brevity, details are not described herein again.

FIG. 22 is a schematic block diagram of an AP 400 according to some embodiments of the present disclosure. As illustrated in FIG. 22, the AP 400 includes:

a communicating unit 410 configured to receive a first MAC frame from an STA, wherein

the first MAC frame is configured for channel contention, a channel contention result corresponding to the first MAC frame is associated with grouping information of the STA, and the STA has UL data to be transmitted.

In some embodiments, the grouping information of the STA includes at least one of:

information indicating whether the STA belongs to an STA group in m STA groups; or

an ID of an STA group to which the STA belongs and/or a number of STAs in the STA group to which the STA belongs in a case where the STA belongs to an STA group in m STA groups.

The m STA groups are pre-assigned, m is a positive integer, and m=1 or m ≥ 2.

In some embodiments, in a case where the STA belongs to a first STA group in m STA groups, and a number of STAs in the first STA group is less than a first threshold, the communicating unit 410 is further configured to transmit a CTS frame, wherein the CTS frame is used to declare that a TXOP associated with the channel contention corresponding to the first MAC frame belongs to the STA; and/or

in a case where the STA belongs to a first STA group in m STA groups, and a number of STAs in the first STA group is greater than or equal to a first threshold, the communicating unit 410 is further configured to transmit a CTS-to-self frame, wherein the CTS-to-self frame is used to declare that a TXOP associated with the channel contention corresponding to the first MAC frame belongs to the AP; and/or

in a case where the STA does not belong to any STA group in m STA groups, the communicating unit 410 is further configured to transmit the CTS frame, wherein the CTS frame is used to declare that a TXOP associated with the channel contention corresponding to the first MAC frame belongs to the STA.

The m STA groups are pre-assigned, m is the positive integer, and m=1 or m $\geq$ 2.

In some embodiments, in a case where the TXOP associated with the channel contention corresponding to the first MAC frame belongs to the AP, part or all of the STAs in the first STA group transmit UL data within the TXOP upon receiving a trigger frame from the AP.

In some embodiments, in a case where the TXOP associated with the channel contention corresponding to the first MAC frame belongs to the AP, the part or all of the STAs in the first STA group transmit the UL data and receive DL data within the TXOP upon receiving the trigger frame from the AP.

In some embodiments, in a case where the TXOP associated with the channel contention corresponding to the first MAC frame belongs to the AP, the AP 400 further includes a processing unit 420;

the communicating unit 410 is further configured to transmit an NFRP trigger frame, wherein the NFRP trigger frame is used to query UL buffer status information of part or all of the STAs in the first STA group; and
the processing unit 420 is configured to assign MU UL transmission resources within the TXOP to the part or all of the STAs in the first STA group based on the UL buffer status information of the part or all of the STAs in the first STA group.

In some embodiments, in a case where m$\geq$2, STAs with a same service period or similar service periods belong to different STA groups in the m STA groups.

In some embodiments, the grouping information of the STA is associated with a first field in the first MAC frame.

In some embodiments, the first field is used to identify an identity of the STA.

In some embodiments, the first field is used to indicate the grouping information of the STA.

In some embodiments, a TXOP used by the STA is a single-protection TXOP or a length-limited multi-protection TXOP, and/or a TXOP used by the AP corresponding to the STA is a single-protection TXOP or a length-limited multi-protection TXOP.

In some embodiments, a TXOP used by the STA is a single-protection TXOP or a length-limited multi-protection TXOP, and/or a TXOP used by the AP corresponding to the STA is a single-protection TXOP or a multi-protection TXOP.

In some embodiments, the UL data at least incudes UL latency-sensitive data.

In some embodiments, the first MAC frame is a G-RTS frame.

In some embodiments, the communicating unit may be a communication interface or a transceiver, or may be an input/output interface of a communication chip or an SOC. The processing unit may be at least one processor.

It should be understood that the AP 400 in the embodiments of the present disclosure may correspond to the AP in the method embodiments of the present disclosure, and the foregoing and other operations and/or functions of the units in the AP 400 are for implementing a corresponding process of the AP in the method 200 for wireless communication illustrated in FIG. 13. For brevity, details are not described herein again.

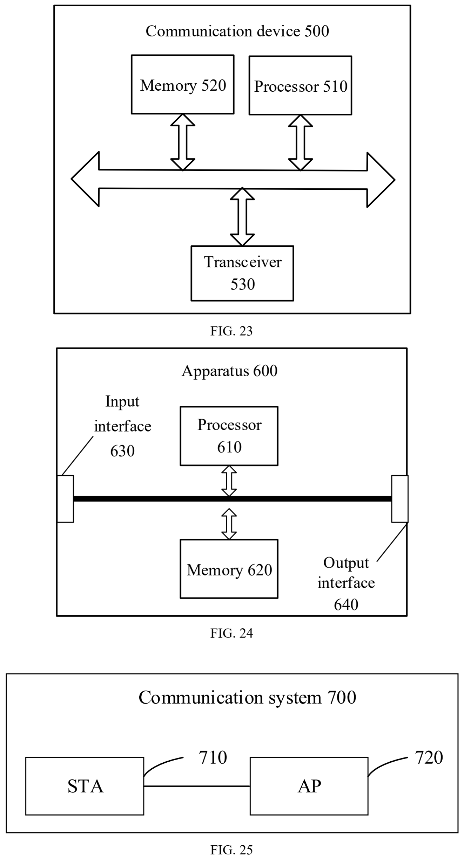

FIG. 23 is a schematic structural diagram of a communication device 500 according to some embodiments of the present disclosure. The communication device 500 illustrated in FIG. 23 includes a processor 510. The processor 510 may be configured to call and run one or more computer programs in a memory to perform the method for wireless communication in the embodiments of the present disclosure.

In some embodiments, as illustrated in FIG. 23, the communication device 500 may further include a memory 520. The processor 510 may be configured to call and run one or more computer programs in the memory 520 to perform the method for wireless communication in the embodiments of the present disclosure.

The memory 520 may be a component independent from the processor 510 or may be integrated in the processor 510.

In some embodiments, as illustrated in FIG. 23, the communication device 500 may further include a transceiver 530. The processor 510 may control the transceiver 530 to communicate with another device, specifically, to transmit information or data to the another device or receive information or data from the another device.

The transceiver 530 may include a transmitter and a receiver. The transceiver 530 may further include at least one antenna.

In some embodiments, the processor 510 may implement a function of a processing unit in an STA, or may implement a function of a processing unit in an AP. For brevity, details are not described herein again.

In some embodiments, the transceiver 530 may implement a function of a communicating unit in the STA. For brevity, details are not described herein again.

In some embodiments, the transceiver 530 may implement a function of a communicating unit in the AP. For brevity, details are not described herein again.

In some embodiments, the communication device 500 may be the AP in the embodiments of the present disclosure. The communication device 500 may implement a corresponding process implemented by the AP in the method for wireless communication in the embodiments of the present disclosure. For brevity, details are not described herein again.

In some embodiments, the communication device 500 may be the STA in the embodiments of the present disclosure. The communication device 500 may implement a corresponding process implemented by the STA in the method for wireless communication in the embodiments of the present disclosure. For brevity, details are not described herein again.

FIG. 24 is a schematic structural diagram of an apparatus according to some embodiments of the present disclosure. An apparatus 600 illustrated in FIG. 24 includes a processor 610. The processor 610 may be configured to can call and run a computer program in a memory to perform the method for wireless communication in the embodiments of the present disclosure.

In some embodiments, as illustrated in FIG. 24, the apparatus 600 further includes a memory 620. The processor 610 may be configured to call and run a computer program in the memory 620 to perform the method for wireless communication in the embodiments of the present disclosure.

The memory 620 may be a component independent from the processor 610 or may be integrated in the processor 610.

In some embodiments, the processor 610 may implement a function of a processing unit in an STA, or may implement a function of a processing unit in an AP. For brevity, details are not described herein again.

In some embodiments, the apparatus 600 may further include an input interface 630. The processor 610 may control the input interface 630 to communicate with another device or a chip, specifically, to acquire information or data from the another device or the chip. In some embodiments, the processor 610 may be located inside or outside the chip.

In some embodiments, the input interface 630 may implement a function of a communicating unit in the STA, or may implement a function of a communicating unit in the AP. For brevity, details are not described herein again.

In some embodiments, the apparatus 600 may further include an output interface 640. The processor 610 may control the output interface 640 to communicate with the another device or the chip, specifically, to output information or data to the another device or the chip. In some embodiments, the processor 610 may be located inside or outside the chip.

In some embodiments, the output interface 640 may implement the function of the communicating unit in the STA, or may implement the function of the communicating unit in the AP. For brevity, details are not described herein again.

In some embodiments, the apparatus may be applicable to the AP in the embodiments of the present disclosure. The apparatus may also implement a corresponding process implemented by the AP in the method for wireless communication in the embodiments of the present disclosure. For brevity, details are not described herein again.

In some embodiments, the apparatus may be applicable to the STA in the embodiments of the present disclosure. The apparatus may also implement a corresponding process implemented by the STA in the method for wireless communication in the embodiments of the present disclosure. For brevity, details are not described herein again.

In some embodiments, the apparatus in the embodiments of the present disclosure may alternatively be a chip, for example, may be a system-level chip, a system chip, a chip system, or an SOC.

FIG. 25 is a schematic block diagram of a communication system 700 according to some embodiments of the present disclosure. As illustrated in FIG 25, the communication system 700 includes an STA 710 and an AP 720.

The STA 710 may be configured to implement a corresponding function implemented by the STA in the foregoing method for wireless communication. The AP 720 may be configured to implement a corresponding function implemented by the AP in the foregoing method for wireless communication. For brevity, details are not described herein again.

It should be understood that the processor in the embodiments of the present disclosure may be an integrated circuit chip capable of signal processing. During the implementation, each operation in the foregoing method embodiments may be performed by an integrated logic circuit of hardware in the processor or by using an instruction in a form of software. The processor may be a general-purpose processor, a digital signal processor (DSP), an application-specific integrated circuit (ASIC), a field programmable gate array (FPGA) or another programmable logic device, a discrete gate or transistor logic device, or a discrete hardware component. The processor can implement or execute the methods, steps, and logical block diagrams disclosed in the embodiments of the present disclosure. The general-purpose processor may be a microprocessor, or the processor may be any conventional processor or the like. The steps of the methods disclosed with reference to the embodiments of the present disclosure may be directly performed by a hardware decoding processor, or performed by a combination of hardware and software modules in the decoding processor. The software module may be located in a mature storage medium in the art, such as a random access memory (RAM), a flash memory, a read-only memory (ROM), a programmable ROM (PROM), an electrically erasable programmable memory, or a register. The storage medium is located in a memory. The processor reads information in the memory, and completes the operations of the foregoing methods in combination with hardware in the processor.

It can be understood that the memory in the embodiments of the present disclosure may be a volatile memory or a non-volatile memory, or may include both a volatile memory and a non-volatile memory. The non-volatile memory may be a ROM, a programmable ROM (PROM), an erasable PROM (EPROM), an electrically EPROM (EEPROM), or a flash memory. The volatile memory may be a RAM, which is used as an external cache. Through illustrative rather than restrictive description, RAMs of many forms are available, for example, a static RAM (SRAM), a dynamic RAM (DRAM), a synchronous DRAM (SDRAM), a double data rate SDRAM (DDR SDRAM), an enhanced SDRAM (ESDRAM), a synchlink DRAM (SLDRAM), and a direct rambus RAM (DRRAM). It should be noted that the memory involved in the systems and methods described herein is intended to include, but is not limited to, these memories and a memory of any other suitable type.

It should be understood that the foregoing description of the memory is exemplary but not limitation. For example, the memory in the embodiments of the present disclosure may alternatively be an SRAM, a DRAM, an SDRAM, a DDR SDRAM, an ESDRAM, an SLDRAM, or a DRRAM. In other words, the memory in the embodiments of the present disclosure is intended to include, but not be limited to, these and any other suitable types of memory.

The embodiments of the present disclosure further provide a computer-readable storage medium configured to store one or more computer programs.

In some embodiments, the computer-readable storage medium may be applicable to the AP in the embodiments of the present disclosure. The one or more computer programs, when , when called and run, cause a computer to perform corresponding processes performed by the AP in each method in the embodiments of the present disclosure. For brevity, details are not described herein again.

In some embodiments, the computer-readable storage medium may be applicable to the STA in the embodiments of the present disclosure. The one or more computer programs, when , when called and run, cause a computer to perform corresponding processes performed by the STA in each method in the embodiments of the present disclosure. For brevity, details are not described herein again.

The embodiments of the present disclosure further provide a computer program product, including one or more computer program instructions.

In some embodiments, the computer program product may be applicable to the AP in the embodiments of the present disclosure. The one or more computer program instructions, when loaded and executed, cause a computer to perform corresponding processes performed by the AP in each method in the embodiments of the present disclosure. For brevity, details are not described herein again.

In some embodiments, the computer program product may be applicable to the STA in the embodiments of the present disclosure. The one or more computer program instructions, when loaded and executed, cause a computer to perform corresponding processes performed by the STA in each method in the embodiments of the present disclosure. For brevity, details are not described herein again.

The embodiments of the present disclosure further provide a computer program.

In some embodiments, the computer program may be applied to the AP in the embodiments of the present disclosure. The computer program, when loaded and run on a computer, cause the computer to perform corresponding processes performed by the AP in each method in the embodiments of the present disclosure. For brevity, details are not described herein again.

In some embodiments, the computer program may be applied to the STA in the embodiments of the present disclosure. The computer program, when loaded and run on a computer, cause the computer to perform corresponding processes performed by the STA in each method in the embodiments of the present disclosure. For brevity, details are not described herein again.

A person of ordinary skill in the art may be aware that, in combination with the examples described in the embodiments disclosed herein, units and algorithm processes may be implemented by electronic hardware or a combination of computer software and electronic hardware. Whether the functions are performed by hardware or software depends on particular applications and design constraints of the technical solutions. A person skilled in the art may use different methods to implement the described functions for each particular application, but it should not be considered that the implementation goes beyond the scope of the present disclosure.

A person skilled in the art can clearly understand that, for convenience and brevity of description, reference may be made to corresponding processes in the foregoing method embodiments for specific working processes of the foregoing systems, apparatuses, and units. Details are not described herein again.

In several embodiments provided herein, it should be understood that the disclosed system, apparatus, and method may be implemented in other manners. For example, the described apparatus embodiments are merely examples. For example, division of the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electrical, mechanical, or other forms.

The units described as separate parts may be or may not be physically separate, and parts displayed as units may be or may not be physical units, may be located in one position, or may be distributed on a plurality of network units. Some or all of the units may be selected based on actual requirements to achieve the objectives of the solutions according to the embodiments.

In addition, functional units in the embodiments of the present disclosure may be integrated into one processing unit, each of the units may exist alone physically, or two or more units are integrated into one unit.

In a case where the functions are implemented in a form of a software functional unit and sold or used as an STAndalone product, the functions may be stored in a computer-readable storage medium. Based on such an understanding, the technical solutions according to the present disclosure essentially, or the part contributing to the prior art, or some of the technical solutions may be implemented in a form of a software product. The computer software product is stored in a storage medium, and includes instructions for instructing a computer device (which may be a personal computer, a server, a network device, or the like) to perform all or some of the operations of the methods described in the embodiments of the present disclosure. The storage medium includes any medium capable of storing program code, such as a USB flash disk, a mobile hard disk, a ROM, a RAM, a magnetic disk, or an optical disk.

The above descriptions are merely specific implementations of the present disclosure, but the scope of protection of the present disclosure is not limited thereto. Any variation or replacement readily figured out by a person skilled in the art within the technical scope disclosed in the present disclosure shall fall within the scope of protection of the present disclosure. Therefore, the scope of protection of the present disclosure should be subject to the protection scope of the claims.

**Claims**

1. A method for wireless communication, performed by a station (STA) having uplink (UL) data to be transmitted, the method comprising:
   transmitting a first medium access control (MAC) frame, wherein the first MAC frame is configured for channel contention, and a channel contention result corresponding to the first MAC frame is associated with grouping information of the STA.

2. The method according to claim 1, wherein the grouping information of the STA comprises at least one of:

   information indicating whether the STA belongs to an STA group in m STA groups; or
   an identifier (ID) of an STA group to which the STA belongs and/or a number of STAs in the STA group to which the STA belongs in a case where the STA belongs to an STA group in m STA groups;
   wherein the m STA groups are pre-assigned, m is a positive integer, and m=1 or m $\geq$ 2.

3. The method according to claim 1 or 2, wherein that the channel contention result corresponding to the first MAC frame is associated with the grouping information of the STA comprises:

   in a case where the STA belongs to a first STA group in m STA groups, and a number of STAs in the first STA group is less than a first threshold, a transmission opportunity (TXOP) associated with the channel contention corresponding to the first MAC frame belongs to the STA; and/or
   in a case where the STA belongs to a first STA group in m STA groups, and a number of STAs in the first STA group is greater than or equal to a first threshold, a TXOP associated with the channel contention corresponding to the first MAC frame belongs to an access point (AP); and/or
   in a case where the STA does not belong to any STA group in m STA groups, a TXOP associated with the channel contention corresponding to the first MAC frame belongs to the STA;
   wherein the m STA groups are pre-assigned, m is a positive integer, and m=1 or m$\geq$2.

4. The method according to claim 3, wherein in a case where the TXOP associated with the channel contention corresponding to the first MAC frame belongs to the AP, part or all of the STAs in the first STA group transmit UL data within the TXOP upon receiving a trigger frame from the AP.

5. The method according to claim 3, wherein in a case where the TXOP associated with the channel contention corresponding to the first MAC frame belongs to the AP, part or all of the STAs in the first STA group transmit UL data and receive downlink (DL) data within the TXOP upon receiving a trigger frame from the AP.

6. The method according to any one of claims 3 to 5, wherein in a case where the TXOP associated with the channel contention corresponding to the first MAC frame belongs to the AP, part or all of the STAs in the first STA group feed back UL buffer status information upon receiving a null data physical protocol data unit feedback report polling (NFRP) trigger frame from the AP, and resources used by the part or all of the STAs in the first STA group to transmit UL data within the TXOP are associated with the UL buffer status information fed back by the part or all of the STAs in the first STA group.

7. The method according to any one of claims 2 to 6, wherein in a case where m≥2, STAs with a same service period or similar service periods belong to different STA groups in the m STA groups.

8. The method according to any one of claims 1 to 7, wherein the grouping information of the STA is associated with a first field in the first MAC frame.

9. The method according to claim 8, wherein the first field is used to identify an identity of the STA.

10. The method according to claim 8, wherein the first field is used to indicate the grouping information of the STA.

11. The method according to any one of claims 1 to 10, wherein a transmission opportunity (TXOP) used by the STA is a single-protection TXOP or a length-limited multi-protection TXOP, and/or a TXOP used by an access point (AP) corresponding to the STA is a single-protection TXOP or a length-limited multi-protection TXOP.

12. The method according to any one of claims 1 to 10, wherein a transmission opportunity (TXOP) used by the STA is a single-protection TXOP or a length-limited multi-protection TXOP, and/or a TXOP used by an access point (AP) corresponding to the STA is a single-protection TXOP or a multi-protection TXOP.

13. The method according to any one of claims 1 to 12, wherein the UL data at least comprises UL latency-sensitive data.

14. The method according to any one of claims 1 to 13, wherein the first MAC frame is a grouping-request to send (G-RTS) frame.

15. A method for wireless communication, performed by an access point (AP), the method comprising:
receiving a first MAC frame from a station (STA), wherein the first MAC frame is configured for channel contention, a channel contention result corresponding to the first MAC frame is associated with grouping information of the STA, and the STA has uplink (UL) data to be transmitted.

16. The method according to claim 15, wherein the grouping information of the STA comprises at least one of:

   information indicating whether the STA belongs to an STA group in m STA groups; or
   an identifier (ID) of an STA group to which the STA belongs and/or a number of STAs in the STA group to which the STA belongs in a case where the STA belongs to an STA group in m STA groups;
   wherein the m STA groups are pre-assigned, m is a positive integer, and m=1 or m≥ 2.

17. The method according to claim 15 or 16, further comprising:

   transmitting a clear to transmit (CTS) frame in a case where the STA belongs to a first STA group in m STA groups and a number of STAs in the first STA group is less than a first threshold, wherein the CTS frame is used to declare that a transmission opportunity (TXOP) associated with the channel contention corresponding to the first MAC frame belongs to the STA; and/or
   transmitting a CTS-to-self frame in a case where the STA belongs to a first STA group in m STA groups and a number of STAs in the first STA group is greater than or equal to a first threshold, wherein the CTS-to-self frame is used to declare that a TXOP associated with the channel contention corresponding to the first MAC frame belongs to the AP; and/or
   transmitting a CTS frame in a case where the STA does not belong to any STA group in m STA groups, wherein the CTS frame is used to declare that a TXOP associated with the channel contention corresponding to the first MAC frame belongs to the STA;
   wherein the m STA groups are pre-assigned, m is a positive integer, and m=1 or m≥2.

18. The method according to claim 17, wherein in a case where the TXOP associated with the channel contention corresponding to the first MAC frame belongs to the AP, part or all of the STAs in the first STA group transmit UL data within the TXOP upon receiving a trigger frame from the AP.

19. The method according to claim 17, wherein in a case where the TXOP associated with the channel contention corresponding to the first MAC frame belongs to the AP, part or all of the STAs in the first STA group transmit UL data and receive downlink (DL) data within the TXOP upon receiving a trigger frame from the AP.

20. The method according to any one of claims 17 to 19, wherein in a case where the TXOP associated with the channel contention corresponding to the first MAC frame belongs to the AP, the method further comprises:

transmitting a null data physical protocol data unit feedback report polling (NFRP) trigger frame, wherein the NFRP trigger frame is used to query UL buffer status information of part or all of the STAs in the first STA group; and assigning multi-user (MU) UL transmission resources within the TXOP to the part or all of the STAs in the first STA group based on the UL buffer status information of the part or all of the STAs in the first STA group.

21. The method according to any one of claims 16 to 20, wherein in a case where m≥2, STAs with a same service period or similar service periods belong to different STA groups in the m STA groups.

22. The method according to any one of claims 15 to 21, wherein the grouping information of the STA is associated with a first field in the first MAC frame.

23. The method according to claim 22, wherein the first field is used to identify an identity of the STA.

24. The method according to claim 22, wherein the first field is used to indicate the grouping information of the STA.

25. The method according to any one of claims 15 to 24, wherein

a transmission opportunity (TXOP) used by the STA is a single-protection TXOP or a length-limited multi-protection TXOP; and/or
a TXOP used by the AP corresponding to the STA is a single-protection TXOP or a length-limited multi-protection TXOP.

26. The method according to any one of claims 15 to 24, wherein

a transmission opportunity (TXOP) used by the STA is a single-protection TXOP or a length-limited multi-protection TXOP; and/or
a TXOP used by the AP corresponding to the STA is a single-protection TXOP or a multi-protection TXOP.

27. The method according to any one of claims 15 to 26, wherein the UL data at least comprises UL latency-sensitive data.

28. The method according to any one of claims 15 to 27, wherein the first MAC frame is a grouping-request to send (G-RTS) frame.

29. A station (STA), wherein the STA has uplink (UL) data to be transmitted, and comprises:
a communicating unit, configured to transmit a first MAC frame, wherein the first MAC frame is configured for channel contention, and a channel contention result corresponding to the first MAC frame is associated with grouping information of the STA.

30. An access point (AP), comprising:
a communicating unit, configured to receive a first MAC frame from a station (STA), wherein the first MAC frame is configured for channel contention, a channel contention result corresponding to the first MAC frame is associated with grouping information of the STA, and the STA has uplink (UL) data to be transmitted.

31. A station (STA), comprising: a processor and a memory, wherein the memory is configured to store one or more computer programs, and the processor is configured to call and run the one or more computer programs stored in the memory to cause the STA to perform the method for wireless communication as defined in any one of claims 1 to 14.

32. An access point (AP), comprising: a processor and a memory, wherein the memory is configured to store one or more computer programs, and the processor is configured to call and run the one or more computer programs stored in the memory to cause the AP to perform the method for wireless communication as defined in any one of claims 15 to 28.

33. A chip, comprising: a processor configured to call and run one or more computer programs in a memory to cause a device equipped with the chip to perform the method for wireless communication as defined in any one of claims 1 to 14.

34. A chip, comprising: a processor configured to call and run one or more computer programs in a memory to cause a device equipped with the chip to perform the method for wireless communication as defined in any one of claims 15 to 28.

35. A computer-readable storage medium, configured to store one or more computer programs, wherein the one or more computer programs, when called and run, cause a device to perform the method for wireless communication as defined in any one of claims 1 to 14.

36. A computer-readable storage medium, configured to store one or more computer programs, wherein the one or more computer programs, when called and run, cause a device to perform the method for wireless communication as defined in any one of claims 15 to 28.

37. A computer program product, comprising: one or more computer program instructions, wherein the one or more computer program instructions, when loaded and executed, cause a device to perform the method for wireless communication as defined in any one of claims 1 to 14.

38. A computer program product, comprising: one or more computer program instructions, wherein the one or more computer program instructions, when loaded and executed, cause a device to perform the method for wireless communication as defined in any one of claims 15 to 28.

39. A computer program, wherein the computer program, when loaded and run, cause a device to perform the method for wireless communication as defined in any one of claims 1 to 14.

40. A computer program, wherein the computer program, when loaded and run, cause a device to perform the method for wireless communication as defined in any one of claims 15 to 28.

FIG. 1

FIG. 2

D1 =RxPHYDelay

D2= AirPropagationTime

Rx/Tx = RxTxTurnaroundTime

M1=M2= MACProcessingDelay

CCAdel = CCATime

FIG. 3

FIG. 4

FIG. 5

FIG. 6

| Frame Control | Duration | RA | TA | Common Info | User Info List | Padding | FCS |
|---|---|---|---|---|---|---|---|

MAC header

| Octets | 2 | 2 | 6 | 6 | 8 or more | Variable | Variable | 4 |

FIG. 7

| Trigger Type | UL Length | More TF | CS Required | UL BW | GI And HE-LTF Type | MU-MIMO HE-LTF Mode | Number of HE-LTF Symbols and Midamble Periodicity |
|---|---|---|---|---|---|---|---|
| B0 ... B3 | B4 ... B15 | B16 | B17 | B18 B19 | B20 B21 | B22 | B23 B25 |

| Bits | 4 | 12 | 1 | 1 | 2 | 2 | 1 | 3 |

| UL STBC | LDPC Extra Symbol Segment | AP Tx Power | Pre-EFC Padding Factor | PE Disambiguity | UL Spatial Reuse | Doppler | UL HE-SIG-A2 Reserved | Reserved | Trigger Dependent Common Info |
|---|---|---|---|---|---|---|---|---|---|
| B26 | B27 B28 | B33 B34 | B35 | B36 | B37 B52 | B53 | B54 B62 | B63 | |

| Bits | 1 | 1 | 6 | 2 | 1 | 16 | 1 | 9 | 1 | Variable |

FIG. 8

| Starting AID | Reserved | Feedback Type | Reserved | UL Target Receive Power | Number of Spatially Multiplexed Users |
|---|---|---|---|---|---|
| 12 | 9 | 4 | 7 | 7 | 1 |

Bits (leftmost label)

FIG. 9

FIG. 10

FIG. 11

| Group initialization stage | Medium contention stage | Medium granting stage | Medium usage stage |
|---|---|---|---|

Timeline

FIG. 12

200

| STA | | AP |

S210 Transmitting, by the STA, a first MAC frame, wherein the STA has UL data to be transmitted, the first MAC frame is configured for channel contention, and a channel contention result corresponding to the first MAC frame is associated with grouping information of the STA

S220 Receiving, by the AP, the first MAC frame from the STA

FIG. 13

| | Frame Control | Duration | RA | TA | Frame Check |
|---|---|---|---|---|---|
| Octets | 2 | 2 | 6 | 6 | 4 |

| | B0  B1 | B2      B3 | B4        B7 | B8 | B9 | B10 | B11 | B12 |
|---|---|---|---|---|---|---|---|---|
| | Protocol Version | Frame Type (=1) | Frame Subtype (=15) | To DS | From DS | Power Management | More Data | High Throughput Control Present |
| Bits | 2 | 2 | 4 | 1 | 1 | 1 | 1 | 1 |

FIG. 14

FIG. 15

FIG. 16

FIG. 17

FIG. 18

FIG. 19

AIFS

TXOP of STA 2

AP

CTS
(to STA 2)

ACK

STA
group 1

STA 1

STA 2

Busy medium

RTS

SU UL
data

STA
group 2

STA 3

STA 4

FIG. 20

STA 300

Communicating unit 310

FIG. 21

AP 400

Communicating unit 410

Processing unit 420

FIG. 22

Communication device 500

Memory 520

Processor 510

Transceiver
530

FIG. 23

Apparatus 600

Input
interface
630

Processor
610

Memory 620

Output
interface
640

FIG. 24

Communication system 700

STA

710

AP

720

FIG. 25

# EP 4 730 896 A1

## INTERNATIONAL SEARCH REPORT

| International application No. |
| --- |
| **PCT/CN2023/100190** |

| A. | CLASSIFICATION OF SUBJECT MATTER |
| --- | --- |

H04W 74/00(2009.01)i

According to International Patent Classification (IPC) or to both national classification and IPC

| B. | FIELDS SEARCHED |
| --- | --- |

Minimum documentation searched (classification system followed by classification symbols)

IPC: H04W

Documentation searched other than minimum documentation to the extent that such documents are included in the fields searched

Electronic data base consulted during the international search (name of data base and, where practicable, search terms used)

CNABS: CNTXT; CNKI; VEN; ENTXTC, 3GPP: 无线局域网, 站, 信道接入, 竞争, 争用, MAC帧, 请求发送, 组, 组 3w 标识, 组 3w ID, 数量, 传输机会, 发送机会, WLAN, STA, access, compet+, RTS, group?, ID, number, TXOP, EDCA, RTS

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| X | CN 103096440 A (ZTE CORP.) 08 May 2013 (2013-05-08) description, paragraphs [0044]-[0107] | 1, 2, 7, 13-16, 21, 27-40 |
| A | CN 102883460 A (ZTE CORP.) 16 January 2013 (2013-01-16) entire document | 1-40 |
| A | WO 2015113204 A1 (HUAWEI TECHNOLOGIES CO., LTD.) 06 August 2015 (2015-08-06) entire document | 1-40 |
| A | US 2016374112 A1 (QUALCOMM INC.) 22 December 2016 (2016-12-22) entire document | 1-40 |

| ☐ Further documents are listed in the continuation of Box C. | ☑ See patent family annex. |
| --- | --- |

| * | Special categories of cited documents: |
| --- | --- |
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **23 January 2024** | **01 March 2024** |

| Name and mailing address of the ISA/CN | Authorized officer |
| --- | --- |
| **China National Intellectual Property Administration (ISA/ CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2023/100190**

| Patent document cited in search report | | | Publication date (day/month/year) | Patent family member(s) | | | Publication date (day/month/year) |
|---|---|---|---|---|---|---|---|
| CN | 103096440 | A | 08 May 2013 | US | 2014376433 | A1 | 25 December 2014 |
| | | | | WO | 2013067919 | A1 | 16 May 2013 |
| CN | 102883460 | A | 16 January 2013 | WO | 2013010430 | A1 | 24 January 2013 |
| | | | | US | 2014140264 | A1 | 22 May 2014 |
| | | | | EP | 2723136 | A1 | 23 April 2014 |
| | | | | EP | 2723136 | A4 | 25 February 2015 |
| WO | 2015113204 | A1 | 06 August 2015 | JP | 2017510140 | A | 06 April 2017 |
| | | | | JP | 6350837 | B2 | 04 July 2018 |
| | | | | EP | 3065349 | A1 | 07 September 2016 |
| | | | | EP | 3065349 | A4 | 25 January 2017 |
| | | | | EP | 3065349 | B1 | 16 May 2018 |
| | | | | KR | 20160089494 | A | 27 July 2016 |
| | | | | KR | 101864238 | B1 | 04 June 2018 |
| | | | | US | 2016285649 | A1 | 29 September 2016 |
| | | | | US | 10164797 | B2 | 25 December 2018 |
| US | 2016374112 | A1 | 22 December 2016 | WO | 2016205526 | A1 | 22 December 2016 |
| | | | | EP | 3311621 | A1 | 25 April 2018 |
| | | | | EP | 3311621 | B1 | 06 January 2021 |
| | | | | US | 11350448 | B2 | 31 May 2022 |